# EUROPÄISCHE PATENTSCHRIFT

(11) **EP 0 905 181 B1**
(45) Veröffentlichungstag und Bekanntmachung des Hinweises auf die Patenterteilung: **15.01.2003**
(21) Anmeldenummer: 98810951.8
(22) Anmeldetag: 22.09.1998
(51) Int. Cl.: C08K 5/13, C08K 5/098, C08K 5/134, A23L 3/3499

(54) **Stabilisatorgemisch für organische Materialien**
Composition of stabilizers for organic materials
Mélange de stabilisateurs pour des matières organiques

(30) Priorität: 29.09.1997 CH 227597
(43) Veröffentlichungstag der Anmeldung: 31.03.1999
(73) Patentinhaber: Ciba Specialty Chemicals Holding Inc., 4057 Basel (CH)
(72) Erfinder: Gilg, Bernard, 68300 St. Louis-la-Chaussée (FR)

(56) Entgegenhaltungen:
- EP-A- 0 716 076
- DE-A- 4 443 361
- US-A- 4 366 280
- US-A- 5 227 418
- US-A- 5 574 082
- US-A- 5 643 985

## Beschreibung

Die vorliegende Erfindung betrifft Zusammensetzungen enthaltend ein dem oxidativen, thermischen oder lichtinduzierten Abbau unterworfenes organisches Material und als Stabilisator mindestens ein Bisphenolesterderivat und Calciumlactat und/oder Calciumstearoyl-2-lactylat, sowie die Verwendung des Stabilisatorgemisches zum Stabilisieren von organischen Materialien gegen oxidativen, thermischen und/oder lichtinduzierten Abbau.

Die Verwendung von Bisphenolesterderivaten als Stabilisatoren für organische Polymere ist beispielsweise aus U.S. 4,365,032; EP-A-0 079 806; U.S. 4,562,281; U.S. 4,774,274; EP-A-0 500 323; U.S. 5,602,196; EP-A-0 716 076; U.S. 5,616,780 oder EP-A-0 727 410 bekannt.

Die Verwendung von beispielsweise Calciumstearoyl-2-lactylat als Stabilisator für bestimmte Polymere ist beispielsweise aus U.S. 4,366,280 bekannt.

Die bekannten Stabilisatoren genügen nicht in jeder Hinsicht den hohen Anforderungen, die ein Stabilisator erfüllen soll, insbesondere hinsichtlich Lagerstabilität, Wasseraufnahme, Hydrolyseempfindlichkeit, Verarbeitungsstabilisierung, Farbverhalten, Flüchtigkeit, Migrationsverhalten, Verträglichkeit und Lichtschutzverbesserung. Es besteht deshalb weiterhin ein Bedarf an wirksamen Stabilisatoren für organische Materialien, die gegen oxidativen, thermischen und/oder lichtinduzierten Abbau empfindlich sind.

Es wurde nun gefunden, dass sich ein Stabilisatorengemisch enthaltend mindestens ein Bisphenolesterderivat und Calciumlactat und/oder Calciumstearoyl-2-lactylat sich besonders gut als Stabilisatoren für organische Materialien, die gegen oxidativen, thermischen und/oder lichtinduzierten Abbau empfindlich sind, eignen.

Die vorliegende Erfindung betrifft daher Zusammensetzungen enthaltend
a) ein dem oxidativen, thermischen oder lichtinduzierten Abbau unterworfenes organisches Material,
b) mindestens eine Verbindung der Formel I 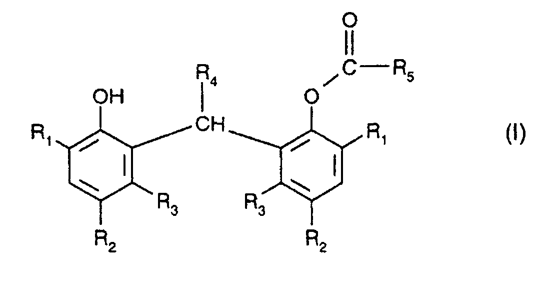 worin
   R₁ und R₂ unabhängig voneinander C₁-C₂₅-Alkyl, unsubstituiertes oder durch C₁-C₄-Alkyl substituiertes C₅-C₁₂-Cycloalkyl; C₇-C₉-Phenylalkyl, unsubstituiertes oder durch C₁-C₄-Alkyl substituiertes Phenyl darstellen,
   R₃ Wasserstoff oder Methyl bedeutet,
   R₄ Wasserstoff oder C₁-C₈-Alkyl darstellt,
   R₅ C₁-C₂₅-Alkyl, durch Sauerstoff, Schwefel oder 〉N―R₆ unterbrochenes C₂-C₂₅-Alkyl; C₂-C₂₄-Alkenyl, unsubstituiertes oder am Phenylring mit Halogen, C₁-C₄-Alkyl, C₁-C₄-Alkoxy oder C₁-C₄-Alkylthio substituiertes C₈-C₃₀-Phenylalkenyl; unsubstituiertes oder durch C₁-C₄-Alkyl substituiertes C₅-C₁₂-Cycloalkyl; unsubstituiertes oder am Phenylring mit Halogen, C₁-C₄-Alkyl, C₁-C₄-Alkoxy oder C₁-C₄-Alkylthio substituiertes C₈-C₃₀-Phenylalkyl; unsubstituiertes oder durch Halogen, C₁-C₄-Alkyl, C₁-C₄-Alkoxy oder C₁-C₄-Alkylthio substituiertes Phenyl bedeutet, R₆ Wasserstoff oder C₁-C₁₈-Alkyl darstellt, und
   c) Calciumlactat und/oder Calciumstearoyl-2-lactylat.

Alkyl mit bis zu 25 Kohlenstoffatomen bedeutet einen verzweigten oder unverzweigten Rest wie beispielsweise Methyl, Ethyl, Propyl, Isopropyl, n-Butyl, sec-Butyl, Isobutyl; tert-Butyl, 1,1-Dimethyl-1-propyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl oder Docosyl. Eine der bevorzugten Bedeutungen von R₁ und R₂ ist beispielsweise C₁-C₁₈-Alkyl, insbesondere C₁-C₁₂-Alkyl, z.B. C₁-C₈-Alkyl. Eine besonders bevorzugte Bedeutung von R₁ und R₂ ist beispielsweise C₁-C₆-Alkyl, insbesondere C₁-C₅-Alkyl, z.B. tert-Butyl oder 1,1-Dimethyl-1-propyl beziehungsweise tert-Pentyl. Eine bevorzugte Bedeutung von R₅ ist beispielsweise C₁-C₁₈-Alkyl, insbesondere C₁-C₁₂-Alkyl. Eine bevorzugte Bedeutung von R₆ ist beispielsweise C₁-C₁₂-Alkyl, insbesondere C₁-C₈-Alkyl, z.B. C₁-C₄-Alkyl.

Unsubstituiertes oder durch C₁-C₄-Alkyl substituiertes C₅-C₁₂-Cycloalkyl bedeutet beispielsweise Cyclopentyl, Methylcyclopentyl, Dimethylcyclopentyl, Cyclohexyl, Methylcyclohexyl, Dimethylcyclohexyl, Trimethylcyclohexyl, tert-Butylcyclohexyl, Cycloheptyl, Cyclooctyl, Cyclononyl, Cyclodecyl, Cycloundecyl oder Cyclododecyl. Eine bevorzugte Bedeutung von R₁ und R₂ ist beispielsweise unsubstituiertes oder durch Methyl substituiertes C₅-C₈-Cycloalkyl, insbesondere unsubstituiertes oder durch Methyl substituiertes Cyclohexyl, z.B. Cyclohexyl oder α-Methylcyclohexyl. Eine bevorzugte Bedeutung von R₅ ist beispielsweise C₅-C₈-Cycloalkyl, insbesondere C₅-C₆-Cycloalkyl, z.B. Cyclohexyl.

C₇-C₉-Phenylalkyl bedeutet beispielsweise Benzyl, α-Methylbenzyl, α,α-Dimethylbenzyl oder 2-Phenylethyl. Benzyl oder α,α-Dimethylbenzyl sind bevorzugt.

Durch Halogen C₁-C₄-Alkyl, C₁-C₄-Alkoxy oder C₁-C₄-Alkylthio substituiertes Phenyl, das vorzugsweise 1 bis 3, insbesondere 1 oder 2 Alkylgruppen enthält, bedeutet beispielsweise o-, m- oder p-Methylphenyl, o-, m- oder p-Methoxyphenyl, o-, m- oder p-Chlorphenyl, o-, m-oder p-Methylthiophenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-Butylphenyl, 2-Ethylphenyl oder 2,6-Diethylphenyl.

Durch Sauerstoff, Schwefel oder 〉N―R₆ unterbrochenes C₂-C₂₅-Alkyl bedeutet beispielsweise CH₃-O-CH₂-, CH₃-O-CH₂CH₂-, CH₃-S-CH₂-, CH₃-NH-CH₂-, CH₃-N(CH₃)-CH₂-, CH₃-O-CH₂CH₂-O-CH₂-, CH₃CH₂-O-CH₂CH₂-O-CH₂CH₂-, CH₃-(O-CH₂CH₂-)₂O-CH₂CH₂-, CH₃-(O-CH₂CH₂-)₃O-CH₂CH₂- oder CH₃-(O-CH₂CH₂-)₄O-CH₂CH₂-.

Alkenyl mit 2 bis 24 Kohlenstoffatomen bedeutet einen verzweigten oder unverzweigten Rest wie beispielsweise Vinyl, Propenyl, 2-Butenyl, 3-Butenyl, Isobutenyl, n-2,4-Pentadienyl, 3-Methyl-2-butenyl, n-2-Octenyl, n-2-Dodecenyl, iso-Dodecenyl, Oleyl, n-2-Octadecenyl oder n-4-Octadecenyl. Bevorzugt ist Alkenyl mit 2 bis 18, insbesondere 2 bis 10 Kohlenstoffatomen, z.B. Vinyl.

Unsubstituiertes oder am Phenylring mit Halogen, C₁-C₄-Alkyl, C₁-C₄-Alkoxy oder C₁-C₄-Alkylthio substituiertes C₈-C₃₀-Phenylalkenyl bedeutet einen verzweigten oder unverzweigten Rest wie beispielsweise Styryl, 2-(p-Methoxyphenyl)-1-ethenyl, 2-(p-Chlorphenyl)-1-ethenyl, 2-(p-Methylphenyl)-1-ethenyl, 2-(p-Methylthiophenyl)-1-ethenyl, 2-Phenyl-2-methyl-1-ethenyl, 3-Phenyl-1-propenyl, 4-Phenyl-1-butenyl, 5-Phenyl-1-pentenyl, 6-Phenyl-1-hexenyl, 7-Phenyl-1-heptenyl oder 8-Phenyl-1-octenyl.

Unsubstituiertes oder am Phenylring mit Halogen, C₁-C₄-Alkyl, C₁-C₄-Alkoxy oder C₁-C₄-Alkylthio substituiertes C₈-C₃₀-Phenylalkyl bedeutet einen verzweigten oder unverzweigten Rest wie beispielsweise Phenylethyl, 2-(p-Methoxyphenyl)-ethyl, 2-(p-Chlorphenyl)-ethyl, 2-(p-Methylphenyl)-ethyl, 2-(p-Methylthiophenyl)-ethyl, 2-Phenyl-2-methyl-ethyl, 3-Phenylpropyl, 4-Phenylbutyl, 5-Phenylpentyl, 6-Phenylhexyl, 7-Phenylheptyl oder 8-Phenyloctyl.

Halogen bedeutet beispielsweise Chlor, Brom oder lod. Bevorzugt ist Chlor.

Bevorzugt sind Zusammensetzungen enthaltend als Komponente (b) mindestens eine Verbindung der Formel I, worin
R₁ und R₂ unabhängig voneinander C₁-C₁₈-Alkyl, unsubstituiertes oder durch C₁-C₄-Alkyl substituiertes C₅-C₈-Cycloalkyl; C₇-C₉-Phenylalkyl oder Phenyl darstellen,
R₃ Wasserstoff oder Methyl bedeutet,
R₄ Wasserstoff oder C₁-C₈-Alkyl darstellt,
R₅ C₁-C₁₈-Alkyl, durch Sauerstoff, Schwefel oder 〉N―R₆ unterbrochenes C₂-C₁₈-Alkyl; C₂-C₁₈-Alkenyl, unsubstituiertes oder am Phenylring mit Halogen, C₁-C₄-Alkyl, C₁-C₄-Alkoxy oder C₁-C₄-Alkylthio substituiertes C₈-C₁₈-Phenylalkenyl; C₅-C₁₂-Cycloalkyl, unsubstituiertes oder am Phenylring mit Halogen, C₁-C₄-Alkyl, C₁-C₄-Alkoxy oder C₁-C₄-Alkylthio substituiertes C₈-C₁₈-Phenylalkyl; unsubstituiertes oder durch Chlor, C₁-C₄-Alkyl oder C₁-C₄-Alkoxy substituiertes Phenyl bedeutet, und
R₆ Wasserstoff oder C₁-C₁₂-Alkyl darstellt.

Bevorzugt sind auch Zusammensetzungen enthaltend als Komponente (b) mindestens eine Verbindung der Formel I, worin
R₁ und R₂ unabhängig voneinander C₁-C₁₂-Alkyl, C₅-C₈-Cycloalkyl, C₇-C₉-Phenylalkyl oder Phenyl darstellen,
R₃ Wasserstoff ist,
R₄ Wasserstoff oder C₁-C₄-Alkyl darstellt, und
R₅ C₁-C₁₂-Alkyl, durch Sauerstoff oder Schwefel unterbrochenes C₂-C₁₂-Alkyl; C₂-C₁₂-Alkenyl, unsubstituiertes oder am Phenylring mit C₁-C₄-Alkyl oder C₁-C₄-Alkoxy substituiertes C₈-C₁₀-Phenylalkenyl; C₅-C₈-Cycloalkyl, unsubstituiertes oder am Phenylring mit Chlor, C₁-C₄-Alkyl oder C₁-C₄-Alkoxy substituiertes C₉-C₁₈-Phenylalkyl; unsubstituiertes oder durch Chlor, C₁-C₄-Alkyl oder C₁-C₄-Alkoxy substituiertes Phenyl bedeutet.

Ebenfalls bevorzugt sind Zusammensetzungen enthaltend als Komponente (b) mindestens eine Verbindung der Formel I, worin
R₁ C₁-C₆-Alkyl, Cyclohexyl oder Phenyl darstellt,
R₂ C₁-C₆-Alkyl, Cyclohexyl oder Phenyl bedeutet,
R₃ Wasserstoff ist,
R₄ Wasserstoff oder Methyl darstellt, und
R₅ C₁-C₁₂-Alkyl, durch Sauerstoff unterbrochenes C₂-C₁₂-Alkyl; C₂-C₁₀-Alkenyl, unsubstituiertes oder am Phenylring mit Methoxy substituiertes C₈-C₁₀-Phenylalkenyl; Cyclohexyl, unsubstituiertes oder durch Chlor oder Methoxy substituiertes Phenyl bedeutet.

Von besonderem Interesse sind Zusammensetzungen enthaltend als Komponente (b) mindestens eine Verbindung der Formel I, worin
R₁ tert-Butyl oder tert-Pentyl bedeutet,
R₂ C₁-C₅-Alkyl darstellt,
R₃ Wasserstoff darstellt,
R₄ Wasserstoff oder Methyl bedeutet, und
R₅ Vinyl darstellt.

Auch von besonderem Interesse sind Zusammensetzungen enthaltend als Komponente (b) mindestens eine Verbindung der Formel I gemäss Tabelle 1.

**Tabelle 1:**

| Verbindungen der Formel I | | | | | |
|---|---|---|---|---|---|
| Nr. | R₁ | R₂ | R₃ | R₄ | R₅ |
| 101 | tert-Butyl | Methyl | H | H | CH₂=CH- |
| 102 | tert-Pentyl | tert-Pentyl | H | Methyl | CH₂=CH- |
| 103 | tert-Butyl | tert-Butyl | H | Methyl | CH₂=CH- |
| 104 | tert-Butyl | Methyl | H | Methyl | CH₂=CH- |
| 105 | tert-Butyl | tert-Butyl | H | Methyl | Methyl |
| 106 | tert-Butyl | tert-Butyl | H | Methyl | Ethyl |
| 107 | tert-Butyl | tert-Butyl | H | Methyl | n-Propyl |
| 108 | tert-Butyl | tert-Butyl | H | Methyl | n-Butyl |
| 109 | tert-Butyl | tert-Butyl | H | Methyl | n-Pentyl |
| 110 | tert-Butyl | tert-Butyl | H | Methyl | n-Hexyl |
| 111 | tert-Butyl | tert-Butyl | H | Methyl | n-Heptyl |
| 112 | tert-Butyl | tert-Butyl | H | Methyl | n-Octyl |
| 113 | tert-Butyl | tert-Butyl | H | Methyl | n-Nonyl |
| 114 | tert-Butyl | tert-Butyl | H | Methyl | n-Decyl |
| 115 | tert-Butyl | tert-Butyl | H | Methyl | n-Undecyl |
| 116 | tert-Butyl | tert-Butyl | H | Methyl | CH₃(CH₂)₃CH(CH₂CH₃)- |
| 117 | tert-Butyl | tert-Butyl | H | Methyl | CH₃CH=CH- |
| 118 | tert-Butyl | tert-Butyl | H | Methyl | CH₂=CH(CH₂)₈- |
| 119 | tert-Butyl | tert-Butyl | H | Methyl | Phenyl-CH=CH- |
| 120 | tert-Butyl | tert-Butyl | H | Methyl | p-Methoxyphenyl-CH=CH- |
| 121 | tert-Butyl | tert-Butyl | H | Methyl | o-Chlorphenyl- |
| 122 | tert-Butyl | tert-Butyl | H | Methyl | p-Methoxyphenyl- |

Von speziellem Interesse sind Zusammensetzungen enthaltend als Komponente (b) die Verbindung (101) oder (102).

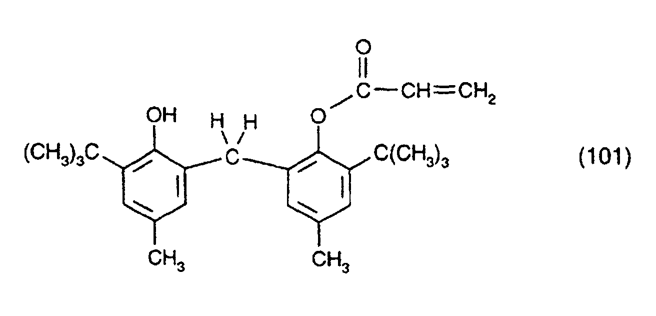

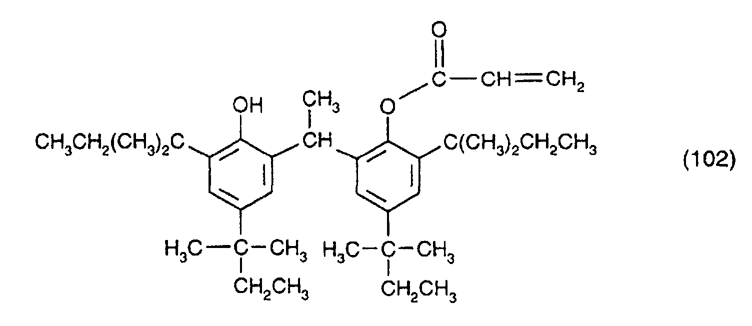

Die Verbindungen der Formel I sind teilweise in der Literatur bekannt oder können beispielsweise in Analogie zu den in den folgenden Literaturstellen offenbarten Verfahren hergestellt werden: U.S. 4,365,032; EP-A-0 079 806; U.S. 4,562,281; U.S. 4,774,274; EP-A-0 500 323; U.S. 5,602,196; EP-A-0 716 076; U.S. 5,616,780 oder EP-A-0 727 410

Die Verbindung (101) ist unter den Namen Irganox®3052 (Ciba Spezialitätenchemie AG) oder Sumilizer®GM (Sumitomo); die Verbindung (102) unter dem Namen Sumilizer®GS (Sumitomo) im Handel erhältlich.

Unter den Begriffen Calciumlactat und Calciumstearoyl-2-lactylat werden diejenigen Verbindungen verstanden wie sie in U.S. 4,366,280 offenbart sind. Eine weitere Beschreibung von Calciumlactat ist beispielsweise im "The Merck Index, Eleventh Edition", 1683, Seite 254 (1989) zu finden. Eine nützliche Beschreibung von Calciumstearoyl-2-lactylat ist beispielsweise im "The Merck Index, Eleventh Edition, 1711, page 257 (1989)" zu finden. Diese bekannten und käuflichen Verbindungen werden beispielsweise auch als Zusätze in Lebensmitteln verwendet. Diese Verbindungen werden von der Firma "American Ingredients Company, PATCO Polymer Additives Division", Kansas City, USA) unter den folgenden Handelsnamen verkauft: Pationic®1230 (Calciumlactat); Pationic®1240 (Gemisch von Calciumlactat und Calciumhydroxid); Pationic®930 (Calciumstearoyl-2-lactylat); Pationic®940 (Gemisch von Calciumstearoyl-2-lactylat und Calciumhydroxid); Pationic®1250 (Gemisch von Calciumlactat, Calciumstearoyl-2-lactylat und Calciumhydroxid).

Von besonderem Interesse sind Zusammensetzungen, worin die Komponente (c) Calciumstearoyl-2-lactylat bedeutet.

Von Interesse sind auch Zusammensetzungen enthaltend zusätzlich zu den Komponenten (a), (b) und (c) zusätzlich (d) mindestens eine Verbindung aus der Gruppe der phenolischen Antioxidantien.

Von speziellem Interesse sind Zusammensetzungen enthaltend als Komponente (d) mindestens eine Verbindung aus der Gruppe der phenolischen Antioxidantien mit Lebensmittelzulassung.

Ebenfalls von Interesse sind Zusammensetzungen, worin die Komponente (d) eine Verbindung der Formel AO-1, AO-2, AO-3, AO-4, AO-5, AO-6, AO-7, AO-8 oder AO-9 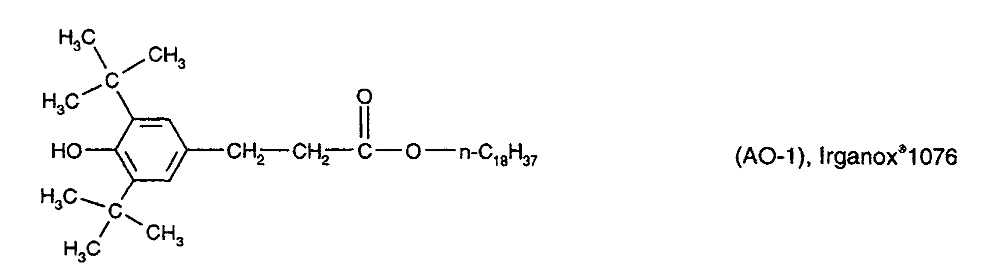 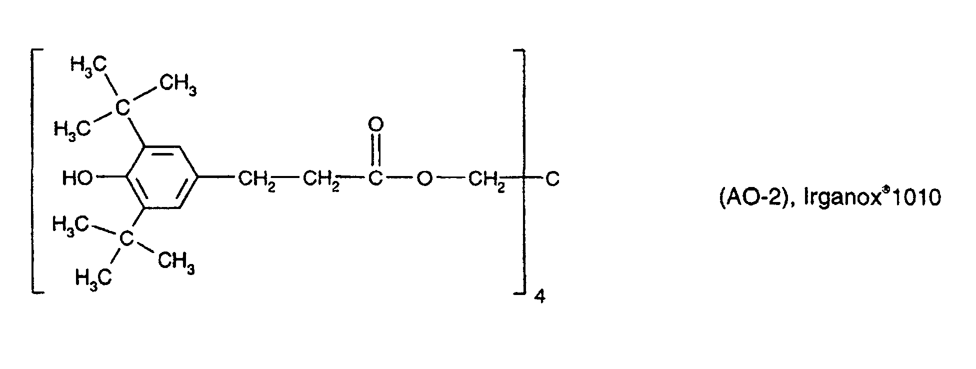 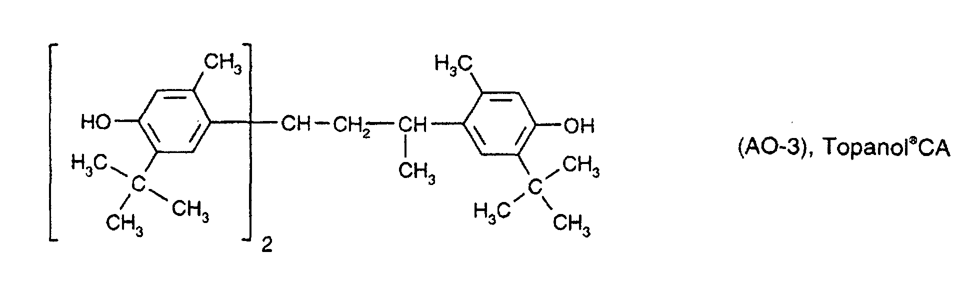 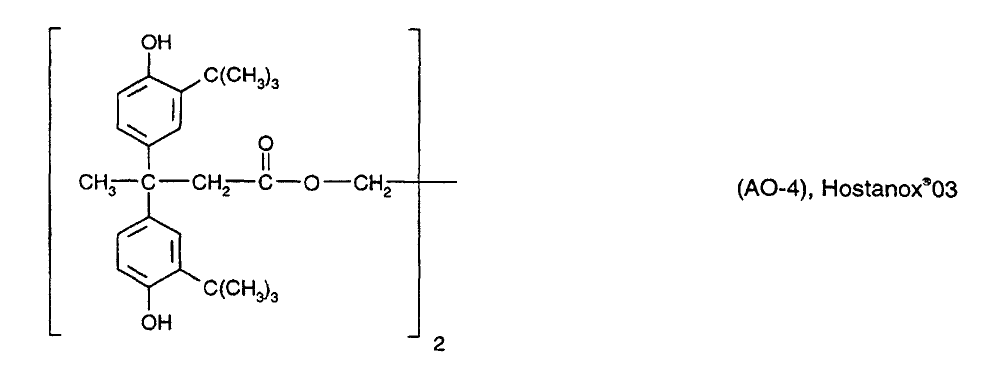 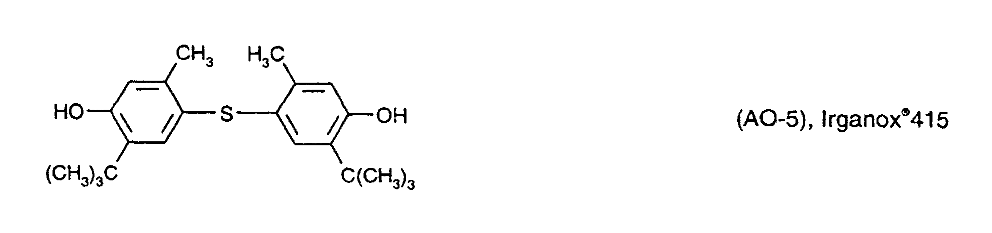 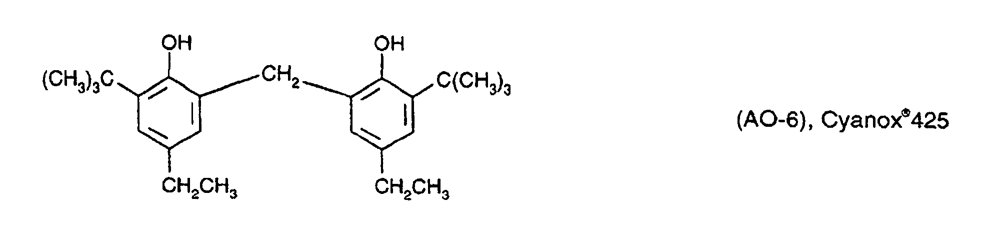 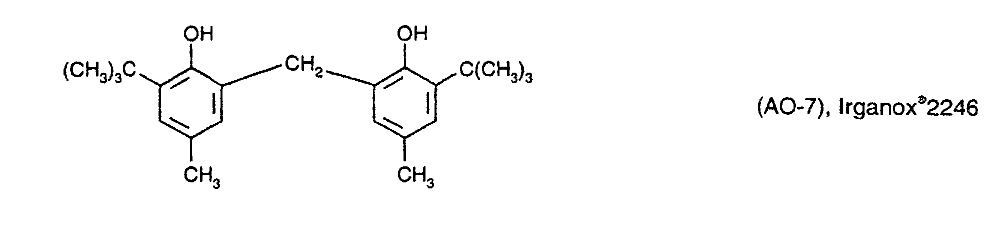 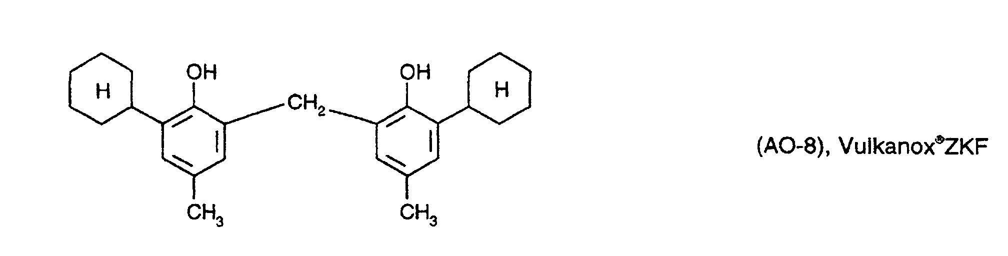 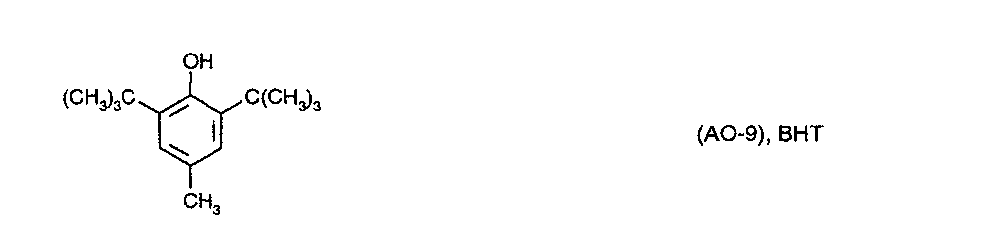 bedeutet.

Die Komponente (d) der erfindungsgemässen Zusammensetzung, bzw. die Verbindungen aus der Gruppe der phenolischen Antioxidantien sind bekannt und teilweise im Handel erhältlich.

Irganox®1076, Irganox®1010, Irganox®415 und Irganox®2245 sind geschützte Handelsnamen der Firma Ciba Spezialitätenchemie AG. Topanol®CA (ICI), Hostanox®03 (Hoechst), Cyanox®425 (American Cyanamid), Vulkanox®ZKF (Bayer) und BHT (Uniroyal) sind ebenfalls im Handel erhältlich.

Das Gemisch der Komponenten (b) und (c) bzw. (b), (c) und (d) eignet sich zum Stabilisieren von organischen Materialien gegen oxidativen, thermischen oder lichtinduzierten Abbau.

Beispiele für derartige Materialien sind:
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), (VLDPE) und (ULDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen la, lla und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-lsobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-lsopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomound -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acryinitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-mphenylen-isophthalamid. Block-Copolymere der vorstehend genanntenPolyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Femer mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide, Polyetherimide, Polyesterimide, Polyhydantoine und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Isocyanaten, lsocyanuraten, Polyisocyanaten oder Epoxidharzen vernetzt sind.
26. Vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/-EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/-Acrylat, POM/MBS, PPO/HIPS, PPO/PA 6.6 und Copolymere, PA/HDPE, PA/PP, PA/PPO, PBT/PC/ABS oder PBT/PET/PC.
29. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.
30. Wässrige Emulsionen natürlicher oder synthetischer Kautschuke, wie z.B. Naturkautschuk-Latex oder Latices von carboxylierten Styrol-Butadien-Copolymeren.

Das Gemisch der Komponenten (b) und (c), bzw. (b), (c) und (d) dient ebenfalls der Polyurethanherstellung, insbesondere der Herstellung von Polyurethanweichschäumen. Dabei sind die erfindungsgemässen Zusammensetzungen und die aus ihnen hergestellten Produkte wirksam gegen Abbau geschützt. Insbesondere die Kernverbrennung (*scorching*) bei der Schaumherstellung wird vermieden.

Die Polyurethane werden beispielsweise durch Umsetzung von Polyethern, Polyestern und Polybutadienen, die endständige Hydroxylgruppen enthalten, mit aliphatischen oder aromatischen Polyisocyanaten erhalten.

Polyether mit endständigen Hydroxylgruppen sind bekannt und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von BF₃, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) und -(1,2), Trimethylolpropan, 4,4'-Dihydroxy-diphenylpropan, Anilin, Ethanolamin oder Ethylendiamin hergestellt. Auch Sucrosepolyether kommen erfindungsgemäss in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z.B. durch Polymerisation von Styrol und Acrylnitril in Gegenwart von Polyethern entstehen, sind geeignet, ebenso OH-Gruppen aufweisende Polybutadiene.

Diese Verbindungen haben in der Regel Molekulargewichte von 400 bis 10'000. Es sind Polyhydroxylverbindungen, insbesondere zwei bis acht Hydroxylgruppen aufweisende Verbindungen, speziell solche vom Molekulargewicht 800 bis 10'000, vorzugsweise 1'000 bis 6'000, z.B. mindestens zwei, in der Regel 2 bis 8, vorzugsweise aber 2 bis 4, Hydroxylgruppen aufweisende Polyether, wie sie für die Herstellung von homogenen und von zellförmigen Polyurethanen an sich bekannt sind.

Selbstverständlich können Mischungen der obengenannten Verbindungen enthaltend mindestens zwei gegenüber Isocyanaten reaktionsfähige Wasserstoffatome, insbesondere mit einem Molekulargewicht von 400-10'000, eingesetzt werden.

Als Polyisocyanate kommen aliphatische, cycloaliphatische, araliphatische, aromatische und heterocyclische Polyisocyanate in Betracht, beispielsweise Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan, 2,4- und 2,6-Hexahydrotoluylendiisocyanat sowie beliebige Gemische dieser Isomeren, Hexahydro-1,3-und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat, Polyphenyl-polymethylen-polyisocyanate, wie sie durch Anilin-Formaldehyd-Kondensation und anschliessende Phosgenierung erhalten werden, m- und p-Isocyanatophenylsulfonyl-isocyanate, perchlorierte Arylpolyisocyanate, Carbodiimidgruppen aufweisende Polyisocyanate, Allophanatgruppen aufweisende Polyisocyanate, Isocyanuratgruppen aufweisende Polyisocyanate, Urethangruppen aufweisende Polyisocyanate, acylierte Harnstoffgruppen aufweisende Polyisocyanate, Biuretgruppen aufweisende Polyisocyanate, Estergruppen aufweisende Polyisocyanate, Umsetzungsprodukte der obengenannten lsocyanate mit Acetalen, und polymere Fettsäurereste enthaltende Polyisocyanate.

Es ist auch möglich, die bei der technischen lsocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDl"), Polyphenyl-polymethylen-polyisocyanate, wie sie durch Anilin-Formaldehyd-Kondensation und anschließende Phosgenierung hergestellt werden ("rohes MDI"), und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate").

Vorzugsweise handelt es sich bei den zu schützenden organischen Materialien um natürliche, halbsynthetische oder bevorzugt synthetische Polymere. Besonders bevorzugt sind thermoplastische Polymere, insbesondere Copolymere von Styrol oder α-Methylstyrol mit Dienen, vor allem Styrol-Butadien-Copolymere, Styrol-Butadien-Blockcopolymere oder Polybutadiene.

Ganz besonders bevorzugte Styrol-Butadien-Blockcopolymere sind Styrolux® (BASF) und K-Resin® (Phillips Petroleum Company). Die Herstellung dieser Kunststoffe ist beispielsweise in DE-A-3 914 945; EP-A-0 346 823 oder U.S. 4,956,408 beschrieben.

Besonders hervorzuheben ist die Wirkung der erfindungsgemässen Verbindungen gegen thermischen und oxidativen Abbau, vor allem bei thermischer Belastung, wie sie bei der Verarbeitung von Thermoplasten auftritt. Die erfindungsgemässen Komponenten (b) und (c), bzw. (b) (c) und (d) sind daher hervorragend als Verarbeitungsstabilisatoren einzusetzen.

Die Komponenten (b), (c) und (d) werden dem zu stabilisierenden organischen Material zweckmässig in einer Menge von 0,01 bis 5 %, beispielsweise 0,01 bis 2 %, vorzugsweise 0,025 bis 2 %, bezogen auf das Gewicht des zu stabilisierenden organischen Materials, zugesetzt.

Zusätzlich zu den Komponenten (a), (b), (c) und (d) können die erfindungsgemässen Zusammensetzungen weitere Costabilisatoren (Additive) enthalten, wie beispielsweise die folgenden:

### 1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methylheptadec-1'-yl)-phenol, 2,4-Dimethyl-6-(1'-methyl-tridec-1'-yl)-phenol und Mischungen davon.
1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
1.4. Tocopherole, z.B. α-Tocopherol, β-Tocopherol, γ-Tocopherol, δ-Tocopherol und Mischungen davon (Vitamin E).
1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
1.6. Alkyliden-Bisphenole, z.B. 2,2'-Methylen-bis(6-tert-butyl-4-methylphenol), 2,2'-Methylenbis(6-tert-butyl-4-ethylphenol), 2,2'-Methylen-bis[4-methyl-6-(a-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-ditert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tertbutyl-4-hydroxy-2-methylphenyl)-pentan.
1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-ditert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, lsooctyl-3,5-di-tert-butyl-4-hydroxybenzyl-mercaptoacetat.
1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris-(3,5-di-tert-butyl-4-hydroxybenzyl)-phenol.
1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tertbutyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tertbutyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.
1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
1.13. Ester der β-(3,5-Di -tert -butvl -4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.17. Amide der β-(3,5-Di-tert-butyl-4-hydroxyphenyl)-propionsäure, wie z.B. N,N'-Bis(3,5-ditert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl)-hydrazid, N,N'-Bis[2-(3-[3,5-di-tert-butyl-4-hydroxyphenyl]-propionyloxy)ethyl]oxamid (Naugard®XL-1 der Firma Uniroyal).
1.18. Ascorbinsäure (Vitamin C).
1.19. Aminische Antioxidantien, wie z.B. N,N'-Di-isopropyl-p-phenylendiamin, N,N'-Di-secbutyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(2-naphthyl)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-pphenylendiamin, 4-(p-Toluol-sulfonamido)-diphenylamin, N,N'-Dimethyl-N,N'-di-sec-butyl-pphenylendiamin, Diphenylamin, N-Allyldiphenylamin, 4-lsopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diaminodiphenylmethan, 1,2-Di-[(2-methyl-phenyl)-aminol-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten lsopropyl/lsohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethypiperidin-4-on, 2,2,6,6-Tetramethylpiperidin-4-ol.

### 2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tertbutyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)-phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; 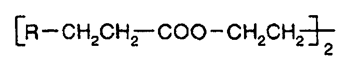 mit R = 3'-tert-Butyl-4'-hydroxy-5'-2H-benzotriazol-2-ylphenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.
2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. - butylester, α-Carbomethoxy-p-methoxy-zimtsäure-methylester, N-(β-Carbomethoxy-β-cyanovinyl)-2-methyl-indolin.
2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
2.6. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro-[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-α-olefin-copolymer und 2,2,6,6-Tetramethyl-4-aminopiperidin oder 1,2,2,6,6-Pentamethyl-4-aminopiperidin.
2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o-und p-Methoxy- sowie von o- und p-Ethoxy-di-substituierten Oxaniliden.
2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-lsooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tertbutyl-6-methylphenyl)-methylphosphit, Bis(2,4-di-tert-butyl-6-methylphenyl)-ethylphosphit, 2,2',2"-Nitrilo[triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)-phosphit.
5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.
6. Nitrone wie z.B. N-Benzyl-alpha-phenyl-nitron, N-Ethyl-alpha-methyl-nitron, N-Octyl-alphaheptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alphaheptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.
7. Thiosynergisten wie z.B. Thiodipropionsäure-di-laurylester oder Thiodipropionsäure-distearylester.
8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.
9. Polyamidstabilisatoren, wie z.B. Kupfersalze in Kombination mit Jodiden und/oder Phosphorverbindungen und Salze des zweiwertigen Mangans.
10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkaliund Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinkbrenzcatechinat.
11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("lonomere").
12. Füllstoffe und Verstärkungsmittel, wie z.B. Calciumcarbonat, Silikate, Glasfasern, Glaskugeln, Talk, Kaolin, Glimmer, Bariumsulfat, Metalloxide und -hydroxide, Ruß, Graphit, Holzmehl und Mehle oder Fasern anderer Naturprodukte, synthetische Fasern.
13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.
14. Benzofuranone bzw. Indolinone, wie z.B. in U.S. 4,325,863; U.S. 4,338,244; U.S. 5,175,312, U.S. 5,216,052; U.S. 5,252,643; DE-A-4316611; DE-A-4316622; DE-A-4316876; EP-A-0589839 oder EP-A-0591102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)-phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butylbenzofuran-2-on, 3-(3,4-Dimethylphenyl)-5,7-di-tert-butyl-benzofuran-2-on, 3-(2,3-Dimethylphenyl)-5,7-di-tert-butyl-benzofuran-2-on.

Die Costabilisatoren, mit Ausnahme der unter Punkt 14 aufgeführten Benzofuranone, werden beispielsweise in Konzentrationen von 0,01 bis 10 %, bezogen auf das Gesamtgewicht des zu stabilisierenden organischen Materials, zugesetzt.

Die Menge an zusätzlich eingesetzten Benzofuran-2-onen, kann in weiten Grenzen schwanken. Beispielsweise können sie zu 0,0001 bis 5, vorzugsweise 0,001 bis 2, insbesondere 0,01 bis 2 Gew.-%, in den erfindungsgemässen Zusammensetzungen enthalten sein.

Die Füllstoffe und Verstärkungsmittel (Punkt 12 der Liste) wie beispielsweise Talk, Calciumcarbonat, Mica oder Kaolin werden dem Polyolefin beispielsweise in Konzentrationen von 0,01 bis 40%, bezogen auf das Gesamtgewicht des zu stabilisierenden Polyolefins, zugesetzt.

Die Füllstoffe und Verstärkungsmittel (Punkt 12 der Liste) wie beispielsweise Metallhydroxide, insbesondere Aluminiumhydroxid oder Magnesiumhydroxid, werden dem Polyolefin beispielsweise in Konzentrationen von 0,01 bis 60 %, bezogen auf das Gesamtgewicht des zu stabilisierenden Polyolefins, zugesetzt.

Russ als Füllstoff wird dem Polyolefin zweckmässig in Konzentrationen von 0,01 bis 5 %, bezogen auf das Gesamtgewicht des zu stabilisierenden Polyolefins, zugesetzt.

Glasfasem als Verstärkungsmittel wird dem Polyolefin zweckmässig in Konzentrationen von 0,01 bis 20 %, bezogen auf das Gesamtgewicht des zu stabilisierenden Polyolefins, zugesetzt.

Weitere bevorzugte Zusammensetzungen enthalten neben den Komponenten (a), (b) und (c) bzw. (a), (b), (c) und (d) noch weitere Additive, insbesondere Erdalkalisalze höherer Fettsäuren wie beispielsweise Calciumstearat.

Die Einarbeitung der Komponenten (b) und (c), bzw. (b), (c) und (d), sowie gegebenenfalls weiterer Additive in das polymere, organische Material, erfolgt nach bekannten Methoden, beispielsweise vor oder während der Formgebung oder auch durch Aufbringen der gelösten oder dispergierten Stabilisatormischung auf das polymere, organische Material, gegebenenfalls unter nachträglichem Verdunsten des Lösungsmittels. Die Stabilisatormischung der Komponenten (b) und (c), bzw. (b), (c) und (d) und gegebenenfalls weiterer Additive kann auch in Form eines Masterbatches, der diese beispielsweise in einer Konzentration von 2,5 bis 25 Gew.-% enthält, den zu stabilisierenden Materialien zugesetzt werden.

Die Stabilisatormischung der Komponenten (b) und (c), bzw. (b), (c) und (d) und gegebenenfalls weitere Additive kann auch vor oder während der Polymerisation oder vor der Vernetzung zugegeben werden.

Die Stabilisatormischung der Komponenten (b) und (c), bzw. (b), (c) und (d) und gegebenenfalls weitere Additive kann in reiner Form oder in Wachsen, Oelen oder Polymeren verkapselt in das zu stabilisierende organische Material eingearbeitet werden.

Die Stabilisatormischung der Komponenten (b) und (c), bzw. (b), (c) und (d) und gegebenenfalls weitere Additive kann auch auf das zu stabilisierende Polymer aufgesprüht werden. Sie ist in der Lage, andere Zusätze (z.B. die oben angegebenen herkömmlichen Additive) bzw. deren Schmelzen zu verdünnen, so dass sie auch zusammen mit diesen Zusätzen auf das zu stabilisierende Polymer aufgesprüht werden kann. Besonders vorteilhaft ist die Zugabe durch Aufsprühen während der Desaktivierung der Polymerisationskatalysatoren, wobei z.B. der zur Desaktivierung verwendete Dampf zum Versprühen verwendet werden kann.

Bei kugelförmig polymerisierten Polymeren kann es z.B. vorteilhaft sein, die Stabilisatormischung der Komponenten (b) und (c), bzw. (b), (c) und (d) und gegebenenfalls zusammen mit anderen Additiven, durch Aufsprühen zu applizieren.

Die so stabilisierten Materialien können in verschiedenster Form angewendet werden, z.B. als Folien, Fasern, Bändchen, Formmassen, Profile oder als Bindemittel für Lacke, insbesondere Pulverlacke, Klebstoffe oder Kitte.

Wie bereits erwähnt, handelt es sich bei den zu schützenden organischen Materialien vorzugsweise um organische, besonders synthetische, Polymere. Besonders vorteilhaft werden dabei thermoplastische Materialien geschützt. Vor allem ist dabei die ausgezeichnete Wirksamkeit der erfindungsgemässen Stabilisatormischung der Komponenten (b) und (c), bzw. (b), (c) und (d) als Verarbeitungsstabilisatoren (Hitzestabilisatoren) hervorzuheben. Zu diesem Zweck werden sie vorteilhaft vor oder während der Verarbeitung des Polymeren diesem zugesetzt. Aber auch weitere Polymere (z.B. Elastomere) oder Schmierstoffe bzw. Hydraulikflüssigkeiten können gegen Abbau, z.B. lichtinduzierten oder thermooxidativen Abbau, stabilisiert werden. Elastomere sind der obigen Aufzählung von möglichen organischen Materialien zu entnehmen.

Die in Frage kommenden Schmierstoffe und Hydraulikflüssigkeiten basieren beispielsweise auf mineralischen oder synthetischen Ölen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in "Ullmanns Enzyklopädie der technischen Chemie", Bd.13, Seiten 85-94 (Verlag Chemie, Weinheim, 1977) beschrieben.

Eine bevorzugte Ausführungsform der vorliegenden Erfindung ist daher die Verwendung der Komponenten (b) und (c), bzw. (b), (c) und (d) als Stabilisatoren, insbesondere Verarbeitungsstabilisatoren (Thermostabilisatoren), für organische Materialien, insbesondere thermoplastische Polymere, gegen oxidativen, thermischen oder lichtinduzierten Abbau.

Die vorliegende Erfindung betrifft auch ein Verfahren zum Stabilisieren eines organischen Materials gegen oxidativen, thermischen oder lichtinduzierten Abbau, dadurch gekennzeichnet, dass man diesem mindestens je eine Komponente (b) und(c), bzw. (b), (c) und (d) einverleibt oder auf diese aufbringt.

Die vorliegende Erfindung betrifft auch eine Stabilisatormischung enthaltend
i) mindestens eine Verbindung der Formel I 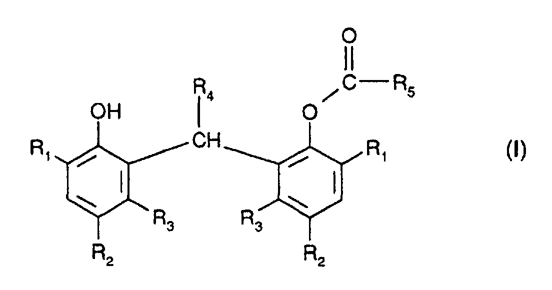 worin
   R₁ und R₂ unabhängig voneinander C₁-C₂₅-Alkyl, unsubstituiertes oder durch C₁-C₄-Alkyl substituiertes C₅-C₁₂-Cycloalkyl; C₇-C₉-Phenylalkyl, unsubstituiertes oder durch C₁-C₄-Alkyl substituiertes Phenyl darstellen,
   R₃ Wasserstoff oder Methyl bedeutet,
   R₄ Wasserstoff oder C₁-C₈-Alkyl darstellt,
   R₅ C₁-C₂₅-Alkyl, durch Sauerstoff, Schwefel oder 〉N―R₆ unterbrochenes C₂-C₂₅-Alkyl; C₂-C₂₄-Alkenyl, unsubstituiertes oder am Phenylring mit Halogen, C₁-C₄-Alkyl, C₁-C₄-Alkoxy oder C₁-C₄-Alkylthio substituiertes C₈-C₃₀-Phenylalkenyl; unsubstituiertes oder durch C₁-C₄-Alkyl substituiertes C₅-C₁₂-Cycloalkyl; unsubstituiertes oder am Phenylring mit Halogen, C₁-C₄-Alkyl, C₁-C₄-Alkoxy oder C₁-C₄-Alkylthio substituiertes C₈-C₃₀-Phenylalkyl; unsubstituiertes oder durch Halogen, C₁-C₄-Alkyl, C₁-C₄-Alkoxy oder C₁-C₄-Alkylthio substituiertes Phenyl bedeutet,
   R₆ Wasserstoff oder C₁-C₁₈-Alkyl darstellt, und
ii) Calciumlactat und/oder Calciumstearoyl-2-lactylat.

Von Interesse ist auch eine Stabilisatormischung enthaltend zusätzlich iii) mindestens eine Verbindung aus der Gruppe der phenolischen Antioxidantien.

Bevorzugt sind Stabilisatormischungen, worin das Gewichtsverhältnis der Komponenten (i) : (ii) 1 : 10 bis 10 : 1, insbesondere 1 : 10 bis 5: 1, z.B. 1 : 6 bis 3 : 2 beträgt.

Bevorzugt sind auch Stabilisatormischungen, worin das Gewichtsverhältnis der Komponenten (i) : (ii) : (iii) 1 : 1 : 1 bis 1 : 10 : 10, insbesondere 1 : 1 : 1 bis 1 : 6 : 6 beträgt.

Die erfindungsgemässe Stabilisatormischung der Komponenten (i) und (ii), bzw. (i), (ii) und (iii) zeichnet sich durch eine ausgeprägt gute Hydrolysestabilität und ein vorteilhaftes Farbverhalten, d.h. geringe Verfärbung der organischen Materialien während der Verarbeitung, aus.

Organische Materialien, die mit den Komponenten der vorliegenden Erfindung stabilisiert sind, sind auch besonders gut vor einem lichtinduzierten Abbau geschützt.

Die bevorzugten Komponenten (b)/(i) und (c)/(ii), bzw. (b)/(i), (c)/(ii) und (d)/(iii) für die Verwendung als Stabilisatoren, das Verfahren zum Stabilisieren und die Stabilisatormischung sind die gleichen, wie sie für die Zusammensetzungen mit einem organischen Material beschrieben werden.

Die folgenden Beispiele erläutern die Erfindung weiter. Angaben in Teilen oder Prozenten beziehen sich auf das Gewicht.

### Beispiel 1: Herstellung der Verbindung (105) (Tabelle 1).

Zu einer Lösung von 4,39g (10,0 mMol) 2,2'-Ethyliden-bis(4,6-di-tert-butylphenol) [hergestellt beispielsweise gemäss EP-A-0 500 323, Beispiel 1] und 1,32g (13,0 mMol) Triethylamin in 50 ml Toluol wird unter Stickstoffatmosphäre bei 10°C innerhalb von 10 Minuten 0,80 ml (10,5 mMol) Acetylchlorid getropft. Nach Ende der Zugabe wird das Reaktionsgemisch während 2 Stunden bei Raumtemperatur gerührt. Das ausgefallene Triethylaminhydrochlorid wird abfiltriert und das Filtrat am Vakuumrotationsverdampfer eingeengt. Kristallisation des Rückstandes aus Ethanol liefert 3.3 g (69%) eines weissen Pulvers, Smp. 210-212°C (Verbindung (105), Tabelle 1). Analyse berechnet: C 79,95; H 10,06 %. Analyse gefunden: C 79,88; H 10,18%.

In Analogie zu Beispiel 1 werden anstelle von Acetylchlorid mit Buttersäurechlorid, Decansäurechlorid und Laurinsäurechlorid die Verbindungen (107), (113) und (115) (Tabelle 1) erhalten. Die Verbindung (107) besitzt einen Smp. von 102-104°C. Analyse berechnet: C 80,26; H 10,30 %. Analyse gefunden: C 80,05; H 10,42 %. Die Verbindung (113) besitzt einen Smp. von 85-86°C. Analyse berechnet: C 81,03; H 10,88 %. Analyse gefunden: C 81,04; H 10,96 %. Die Verbindung (115) besitzt einen Smp. von 85-87°C. Analyse berechnet: C 81,23; H 11,04 %. Analyse gefunden: C 80,98; H 11,24 %.

### Beispiel 2: Herstellung der Verbindung (119) (Tabelle 1).

Zu einer Lösung von 15,42g (35,2 mMol) 2,2'-Ethyliden-bis(4,6-di-tert-butylphenol) [hergestellt beispielsweise gemäss EP-A-0 500 323, Beispiel 1] und 6,37ml (45,7 mMol) Triethylamin in 100ml Toluol wird bei Raumtemperatur eine Lösung von 5,86g (35,2mMol) trans-Zimtsäurechlorid in 30ml Toluol getropft. Nach Ende der Zugabe wird die erhaltene hellgelbe Suspension während 3 Stunden bei Raumtemperatur gerührt. Das ausgefallene Triethylaminhydrochlorid wird abfiltriert und das Filtrat am Vakuumrotationsverdampfer eingeengt. Kristallisation des Rückstandes aus Isopropanol liefert 18g (90%) eines weissen Pulvers, Smp. 195-198°C (Verbindung (119), Tabelle 1). Analyse berechnet: C 82,35; H 9,21 %. Analyse gefunden: C 82,38; H 9,29 %.

In Analogie zu Beispiel 2 wird anstelle von trans-Zimtsäurechlorid mit Crotonsäurechlorid die Verbindung (117) (Tabelle 1) erhalten. Die Verbindung (117) besitzt einen Smp. von 116-121°C. Analyse berechnet: C 80,58; H 9,95 %. Analyse gefunden: C 80,49; H 10,04 %.

### Beispiel 3: Stabilisierung von Styrol-Butadien-Blockcopolymeren.

Bei oxidativer, thermischer oder lichtinduziertes Schädigung von Styrol-Butadien-Blockcopolymeren erfolgt eine Vernetzung der Kautschukphase. Diese Vernetzung führt während der Verarbeitung in einem Extruder oder in einer Spritzgussmaschine zu einer unerwünschten Steigerung der Schmelzviskosität und folglich zu einem unerwünschten Extrusionsdruck. Die Prüfung der Verarbeitungsstabilität von Styrol-Butadien-Blockcopolymeren wird in einem Kapillarrheometer durchgeführt. Dabei wird das Polymerisat, ähnlich wie bei der Extrusion, als Schmelze durch eine Düse gedrückt.

20 g Granulat eines Styrol-Butadien-Blockcopolymeren (Styrolux®, BASF) werden in 200 ml Cyclohexan gelöst und anschliessend mit Methanol ausgefällt. Das ausgefallene Polymer wird filtriert und am Hochvakuum getrocknet. Dieses stabilisatorfreie Polymer wird erneut in 100 ml Cyclohexan gelöst und mit den in der Tabelle 2 aufgeführten Stabilisatoren, gelöst in Toluol, versetzt. Die Lösung wird anschliessend am Vakuumrotationsverdampfer eingeengt und der Rückstand bei 60°C am Hochvakuum getrocknet. Das so erhaltene Polymer wird bei 180°C zu 2 mm dicken Platten verpresst, aus denen kreisförmige Proben mit einem Druchmesser von 8 mm gestanzt werden. Diese Proben werden in den Vorlagekanal eines Kapillarrheometers des Typs Keyeness Galaxy®V eingefüllt. Die eine Hälfte der Proben wird bei 250°C und die andere Hälfte der Proben bei 260°C mit einer Schergeschwindigkeit von 14,594 sec⁻¹ vermessen. Nach einer Verlaufzeit von 6 Minuten wird die scheinbare Schergeschwindigkeit während 30 Minuten als Funktion der Zeit registriert. Die Steigung der Kurve (Δη)/Δt in Pascal • Sekunde pro Minute) ist ein Mass für den Vernetzungsgrad des Polymers und steht daher in direktem Zusammenhang mit der Wirkung der Stabilisatoren. Je kleiner dieser Wert ist, desto wirksamer sind die Stabilisatoren. Die Resultate sind in der Tabelle 2 zusammengefasst.

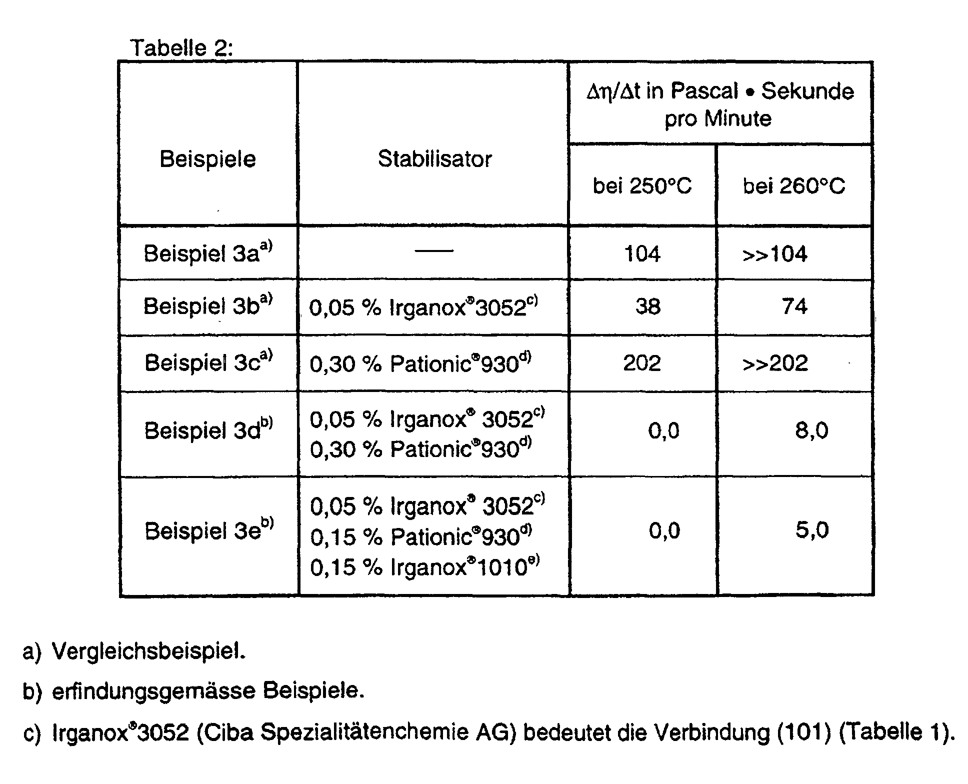

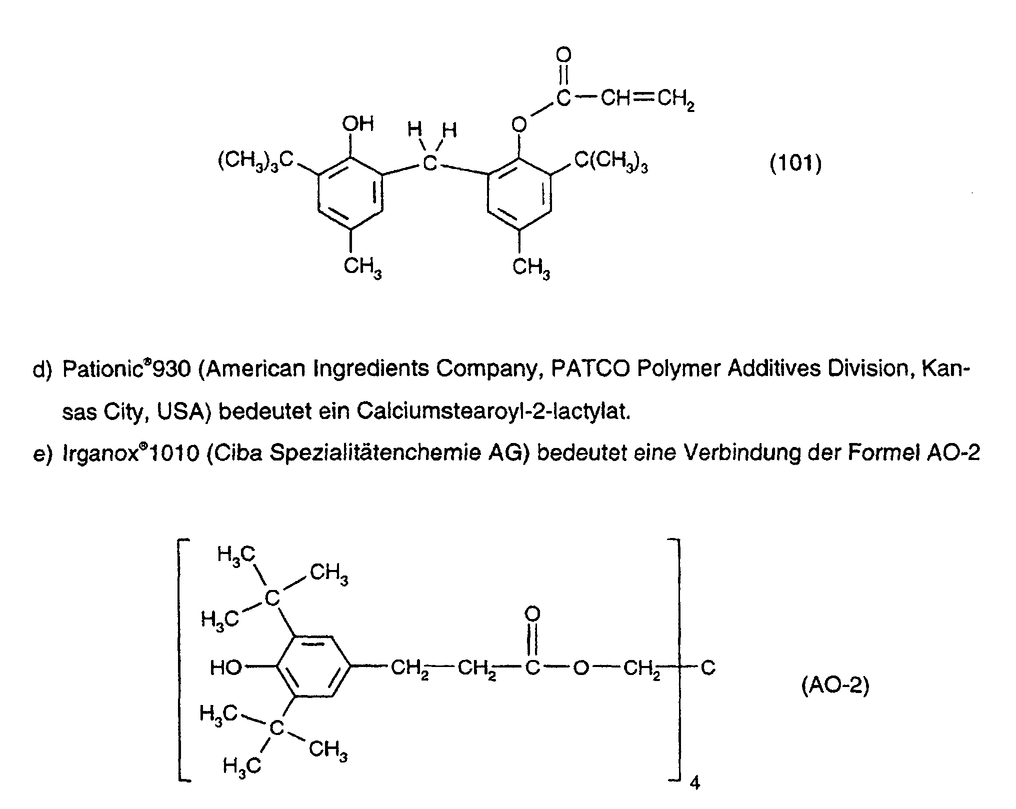

## Patentansprüche

1. Zusammensetzung enthaltend
a) ein dem oxidativen, thermischen oder lichtinduzierten Abbau unterworfenes organisches Material,
b) mindestens eine Verbindung der Formel I 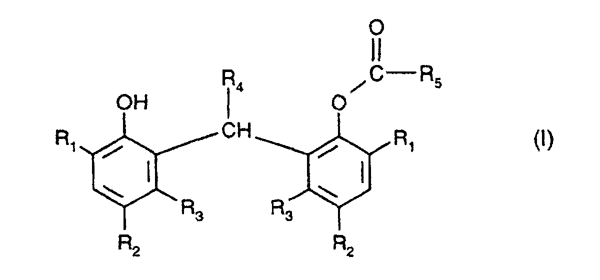 worin
R₁ und R₂ unabhängig voneinander C₁-C₂₅-Alkyl, unsubstituiertes oder durch C₁-C₄-Alkyl substituiertes C₅-C₁₂-Cycloalkyl; C₇-C₉-Phenylalkyl, unsubstituiertes oder durch C₁-C₄-Alkyl substituiertes Phenyl darstellen,
R₃ Wasserstoff oder Methyl bedeutet,
R₄ Wasserstoff oder C₁-C₈-Alkyl darstellt,
R₅ C₁-C₂₅-Alkyl, durch Sauerstoff, Schwefel oder 〉N―R₆ unterbrochenes C₂-C₂₅-Alkyl; C₂-C₂₄-Alkenyl, unsubstituiertes oder am Phenylring mit Halogen, C₁-C₄-Alkyl, C₁-C₄-Alkoxy oder C₁-C₄-Alkylthio substituiertes C₈-C₃₀-Phenylalkenyl; unsubstituiertes oder durch C₁-C₄-Alkyl substituiertes C₅-C₁₂-Cycloalkyl; unsubstituiertes oder am Phenylring mit Halogen, C₁-C₄-Alkyl, C₁-C₄-Alkoxy oder C₁-C₄-Alkylthio substituiertes C₈-C₃₀-Phenylalkyl; unsubstituiertes oder durch Halogen, C₁-C₄-Alkyl, C₁-C₄-Alkoxy oder C₁-C₄-Alkylthio substituiertes Phenyl bedeutet,
R₆ Wasserstoff oder C₁-C₁₈-Alkyl darstellt, und
c) Calciumlactat und/oder Calciumstearoyl-2-lactylat.

2. Zusammensetzung gemäss Anspruch 1, enthaltend zusätzlich d) mindestens eine Verbindung aus der Gruppe der phenolischen Antioxidantien.

3. Zusammensetzung gemäss Anspruch 1, enthaltend als Komponente (b) mindestens eine Verbindung der Formel I, worin
R₁ und R₂ unabhängig voneinander C₁-C₁₈-Alkyl, unsubstituiertes oder durch C₁-C₄-Alkyl substituiertes C₅-C₈-Cycloalkyl; C₇-C₉-Phenylalkyl oder Phenyl darstellen,
R₃ Wasserstoff oder Methyl bedeutet,
R₄ Wasserstoff oder C₁-C₈-Alkyl darstellt,
R₅ C₁-C₁₈-Alkyl, durch Sauerstoff, Schwefel oder 〉N―R₆ unterbrochenes C₂-C₁₈-Alkyl; C₂-C₁₈-Alkenyl, unsubstituiertes oder am Phenylring mit Halogen, C₁-C₄-Alkyl, C₁-C₄-Alkoxy oder C₁-C₄-Alkylthio substituiertes C₈-C₁₈-Phenylalkenyl; C₅-C₁₂-Cycloalkyl, unsubstituiertes oder am Phenylring mit Halogen, C₁-C₄-Alkyl, C₁-C₄-Alkoxy oder C₁-C₄-Alkylthio substituiertes C₈-C₁₈-Phenylalkyl; unsubstituiertes oder durch Chlor, C₁-C₄-Alkyl oder C₁-C₄-Alkoxy substituiertes Phenyl bedeutet, und
R₆ Wasserstoff oder C₁-C₁₂-Alkyl darstellt.

4. Zusammensetzung gemäss Anspruch 1, enthaltend als Komponente (b) mindestens eine Verbindung der Formel I, worin
R₁ und R₂ unabhängig voneinander C₁-C₁₂-Alkyl, C₅-C₈-Cycloalkyl, C₇-C₉-Phenylalkyl oder Phenyl darstellen,
R₃ Wasserstoff ist,
R₄ Wasserstoff oder C₁-C₄-Alkyl darstellt, und
R₅ C₁-C₁₂-Alkyl, durch Sauerstoff oder Schwefel unterbrochenes C₂-C₁₂-Alkyl; C₂-C₁₂-Alkenyl, unsubstituiertes oder am Phenylring mit C₁-C₄-Alkyl oder C₁-C₄-Alkoxy substituiertes C₈-C₁₀-Phenylalkenyl; C₅-C₈-Cycloalkyl, unsubstituiertes oder am Phenylring mit Chlor, C₁-C₄-Alkyl oder C₁-C₄-Alkoxy substituiertes C₈-C₁₈-Phenylalkyl; unsubstituiertes oder durch Chlor, C₁-C₄-Alkyl oder C₁-C₄-Alkoxy substituiertes Phenyl bedeutet.

5. Zusammensetzung gemäss Anspruch 1, enthaltend als Komponente (b) mindestens eine Verbindung der Formel I, worin
R₁ C₁-C₆-Alkyl, Cyclohexyl oder Phenyl darstellt,
R₂ C₁-C₆-Alkyl, Cyclohexyl oder Phenyl bedeutet,
R₃ Wasserstoff ist,
R₄ Wasserstoff oder Methyl darstellt, und
R₅ C₁-C₁₂-Alkyl, durch Sauerstoff unterbrochenes C₂-C₁₂-Alkyl; C₂-C₁₀-Alkenyl, unsubstituiertes oder am Phenylring mit Methoxy substituiertes C₈-C₁₀-Phenylalkenyl; Cyclohexyl, unsubstituiertes oder durch Chlor oder Methoxy substituiertes Phenyl bedeutet.

6. Zusammensetzung gemäss Anspruch 1, enthaltend als Komponente (b) mindestens eine Verbindung der Formel I, worin
R₁ tert-Butyl oder tert-Pentyl bedeutet,
R₂ C₁-C₅-Alkyl darstellt,
R₃ Wasserstoff darstellt,
R₄ Wasserstoff oder Methyl bedeutet, und
R₅ Vinyl darstellt.

7. Zusammensetzung gemäss Anspruch 1, worin die Komponente (c) Calciumstearoyl-2-lactylat bedeutet.

8. Zusammensetzung gemäss Anspruch 2, worin die Komponente (d) eine Verbindung der Formel AO-1, AO-2, AO-3, AO-4, AO-5, AO-6, AO-7, AO-8 oder AO-9 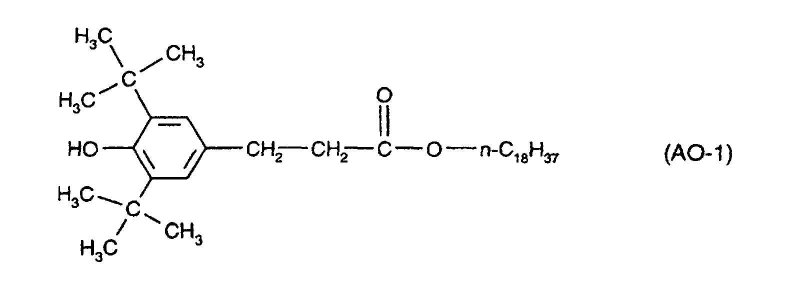 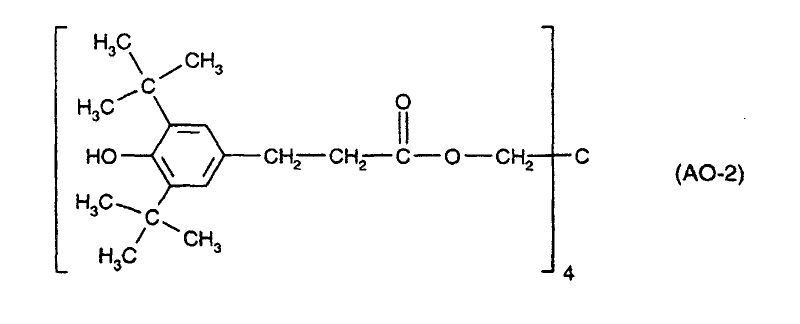 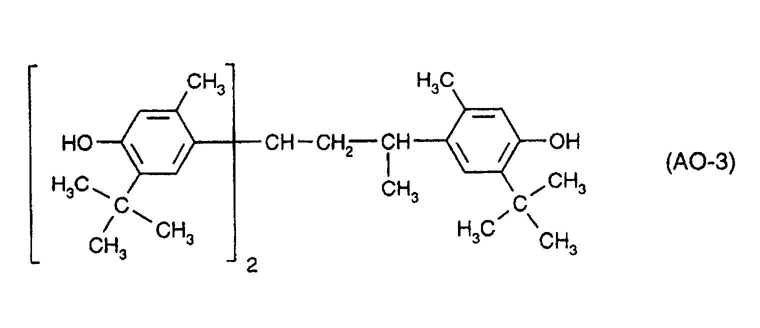 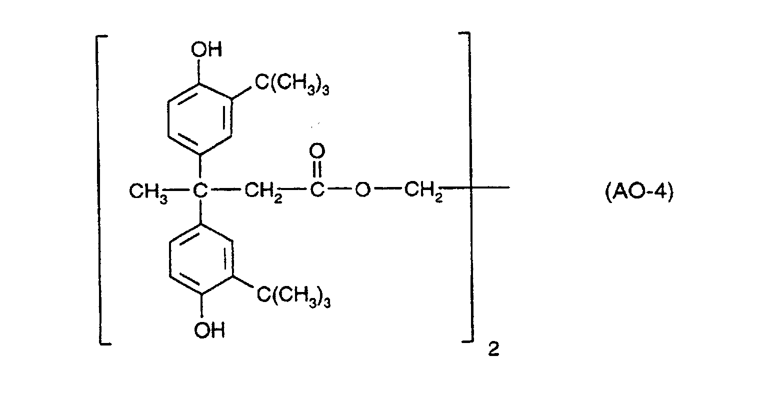 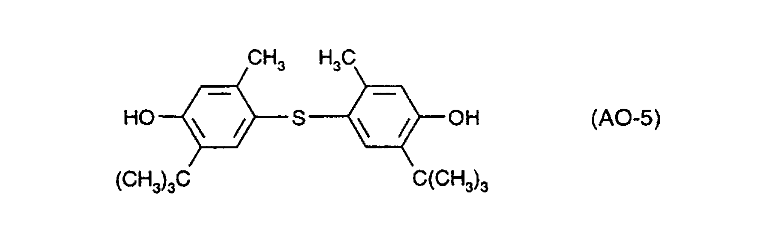 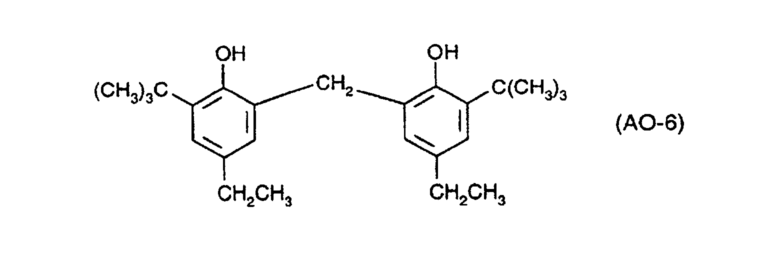 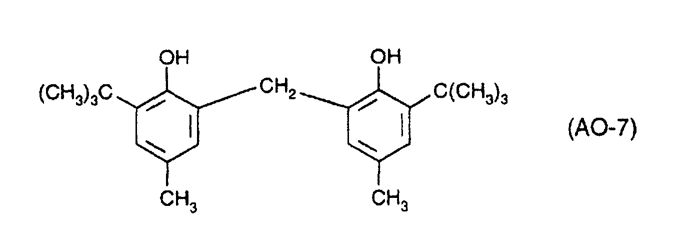 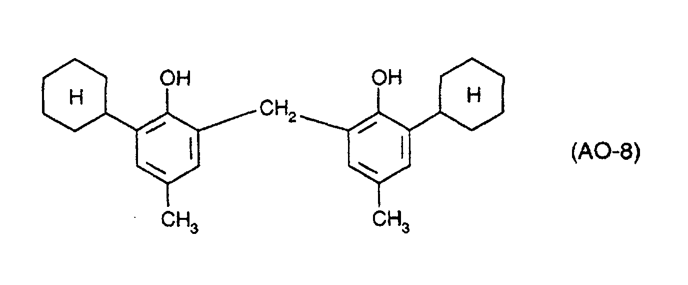 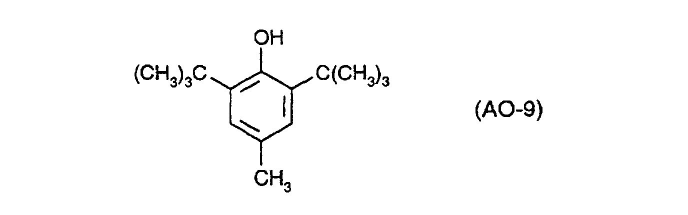 bedeutet.

9. Zusammensetzung gemäss Anspruch 1, worin die Komponente (a) ein natürliches, halbsynthetisches oder synthetisches Polymer ist.

10. Zusammensetzung gemäss Anspruch 1, worin die Komponente (a) ein thermoplastisches Polymer ist.

11. Zusammensetzung gemäss Anspruch 1, worin die Komponente (a) ein Copolymeres von Styrol oder α-Methylstyrol mit Dienen ist.

12. Zusammensetzung gemäss Anspruch 1, worin die Komponente (a) ein Styrol-Butadien-Copolymer, Styrol-Butadien-Blockcopolymer oder Polybutadien ist.

13. Zusammensetzung gemäss Anspruch 1, enthaltend neben den Komponenten (a), (b) und (c) zusätzlich weitere Additive.

14. Stabilisatormischung enthaltend
i) mindestens eine Verbindung der Formel I 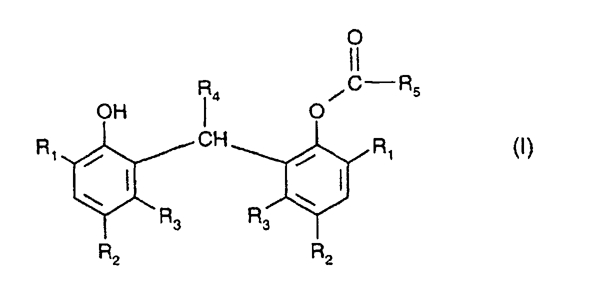 worin
R₁ und R₂ unabhängig voneinander C₁-C₂₅-Alkyl, unsubstituiertes oder durch C₁-C₄-Alkyl substituiertes C₅-C₁₂-Cycloalkyl; C₇-C₉-Phenylalkyl, unsubstituiertes oder durch C₁-C₄-Alkyl substituiertes Phenyl darstellen,
R₃ Wasserstoff oder Methyl bedeutet,
R₄ Wasserstoff oder C₁-C₈-Alkyl darstellt,
R₅ C₁-C₂₅-Alkyl, durch Sauerstoff, Schwefel oder 〉N―R₆ unterbrochenes C₂-C₂₅-Alkyl; C₂-C₂₄-Alkenyl, unsubstituiertes oder am Phenylring mit Halogen, C₁-C₄-Alkyl, C₁-C₄-Alkoxy oder C₁-C₄-Alkylthio substituiertes C₈-C₃₀-Phenylalkenyl; unsubstituiertes oder durch C₁-C₄-Alkyl substituiertes C₅-C₁₂-Cycloalkyl; unsubstituiertes oder am Phenylring mit Halogen, C₁-C₄-Alkyl, C₁-C₄-Alkoxy oder C₁-C₄-Alkylthio substituiertes C₈-C₃₀-Phenylalkyl; unsubstituiertes oder durch Halogen, C₁-C₄-Alkyl, C₁-C₄-Alkoxy oder C₁-C₄-Alkylthio substituiertes Phenyl bedeutet,
R₆ Wasserstoff oder C₁-C₁₈-Alkyl darstellt, und
ii) Calciumlactat und/oder Calciumstearoyl-2-lactylat.

15. Stabilisatormischung gemäss Anspruch 14, enthaltend zusätzlich iii) mindestens eine Verbindung aus der Gruppe der phenolischen Antioxidantien.

16. Stabilisatormischung gemäss Anspruch 14, worin das Gewichtsverhältnis der Komponenten (i) : (ii) 1 : 10 bis 10 : 1 beträgt.

17. Stabilisatormischung gemäss Anspruch 15, worin das Gewichtsverhältnis der Komponenten (i) : (ii) : (iii) 1 : 1 : 1 bis 1 : 10 : 10 beträgt.

18. Verfahren zum Stabilisieren eines organischen Materials gegen oxidativen, thermischen oder lichtinduzierten Abbau, **dadurch gekennzeichnet, dass** man diesem mindestens je eine Komponente (b) und (c) gemäss Anspruch 1 einverleibt oder auf diese aufbringt.

19. Verwendung einer Mischung der Komponenten (b) und (c) gemäss Anspruch 1 als Stabilisatoren für organische Materialien gegen oxidativen, thermischen oder lichtinduzierten Abbau.

## Claims

1. A composition comprising
a) an organic material subject to oxidative, thermal or light-induced degradation,
b) at least one compound of formula I 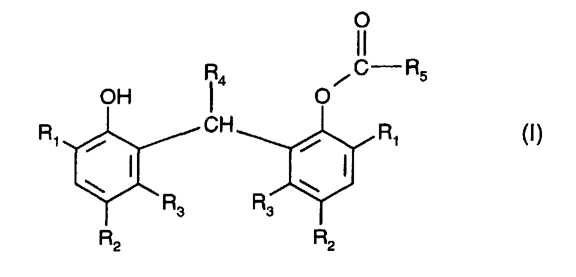 wherein
R₁ and R₂ are each independently of the other C₁-C₂₅alkyl; C₅-C₁₂cycloalkyl unsubstituted or substituted by C₁-C₄alkyl; C₇-C₉phenylalkyl; or phenyl unsubstituted or substituted by C₁-C₄alkyl,
R₃ is hydrogen or methyl,
R₄ is hydrogen or C₁-C₈alkyl,
R₅ is C₁-C₂₅alkyl; C₂-C₂₅alkyl interrupted by oxygen, sulfur or 〉N―R₆; C₂-C₂₄alkenyl; C₈-C₃₀phenylalkenyl unsubstituted or substituted on the phenyl ring by halogen, C₁-C₄alkyl, C₁-C₄alkoxy or C₁-C₄alkylthio; C₅-C₁₂cycloalkyl unsubstituted or substituted by C₁-C₄alkyl; C₈-C₃₀phenylalkyl unsubstituted or substituted on the phenyl ring by halogen, C₁-C₄alkyl, C₁-C₄alkoxy or C₁-C₄alkylthio; or phenyl unsubstituted or substituted by halogen, C₁-C₄alkyl, C₁-C₄alkoxy or C₁-C₄alkylthio,
R₆ is hydrogen or C₁-C₁₈alkyl, and
c) calcium lactate and/or calcium stearoyl-2-lactylate.

2. A composition according to claim 1 comprising in addition d) at least one compound from the group of the phenolic antioxidants.

3. A composition according to claim 1 comprising as component (b) at least one compound of formula I wherein
R₁ and R₂ are each independently of the other C₁-C₁₈alkyl; C₅-C₈cycloalkyl unsubstituted or substituted by C₁-C₄alkyl; C₇-C₉phenylalkyl; or phenyl,
R₃ is hydrogen or methyl,
R₄ is hydrogen or C₁-C₈alkyl,
R₅ is C₁-C₁₈alkyl; C₂-C₁₈alkyl interrupted by oxygen, sulfur or 〉N―R₆ ; C₂-C₁₈alkenyl; C₈-C₁₈phenylalkenyl unsubstituted or substituted on the phenyl ring by halogen, C₁-C₄alkyl, C₁-C₄alkoxy or C₁-C₄alkylthio; C₅-C₁₂cycloalkyl; C₈-C₁₈phenylalkyl unsubstituted or substituted on the phenyl ring by halogen, C₁-C₄alkyl, C₁-C₄alkoxy or C₁-C₄alkylthio; or phenyl unsubstituted or substituted by chlorine, C₁-C₄alkyl or C₁-C₄alkoxy, and
R₆ is hydrogen or C₁-C₁₂alkyl.

4. A composition according to claim 1 comprising as component (b) at least one compound of formula I wherein
R₁ and R₂ are each independently of the other C₁-C₁₂alkyl, C₅-C₈cycloalkyl, C₇-C₉phenylalkyl or phenyl,
R₃ is hydrogen,
R₄ is hydrogen or C₁-C₄alkyl, and
R₅ is C₁-C₁₂alkyl; C₂-C₁₂alkyl interrupted by oxygen or sulfur; C₂-C₁₂alkenyl; C₈-C₁₀phenylalkenyl unsubstituted or substituted on the phenyl ring by C₁-C₄alkyl or C₁-C₄alkoxy; C₅-C₈-cycloalkyl; C₈-C₁₈phenylalkyl unsubstituted or substituted on the phenyl ring by chlorine, C₁-C₄alkyl or C₁-C₄alkoxy; or phenyl unsubstituted or substituted by chlorine, C₁-C₄alkyl or C₁-C₄alkoxy.

5. A composition according to claim 1 comprising as component (b) at least one compound of formula I wherein
R₁ is C₁-C₆alkyl, cyclohexyl or phenyl,
R₂ is C₁-C₆alkyl, cyclohexyl or phenyl,
R₃ is hydrogen,
R₄ is hydrogen or methyl, and
R₅ is C₁-C₁₂alkyl; C₂-C₁₂alkyl interrupted by oxygen; C₂-C₁₀alkenyl; C₈-C₁₀phenylalkenyl unsubstituted or substituted on the phenyl ring by methoxy; cyclohexyl; or phenyl unsubstituted or substituted by chlorine or methoxy.

6. A composition according to claim 1 comprising as component (b) at least one compound of formula I wherein
R₁ is tert-butyl or tert-pentyl,
R₂ is C₁-C₅alkyl,
R₃ is hydrogen,
R₄ is hydrogen or methyl, and
R₅ is vinyl.

7. A composition according to claim 1, wherein component (c) is calcium stearoyl-2-lactylate.

8. A composition according to claim 2, wherein component (d) is a compound of formula AO-1, AO-2, AO-3, AO-4, AO-5, AO-6, AO-7, AO-8 or AO-9

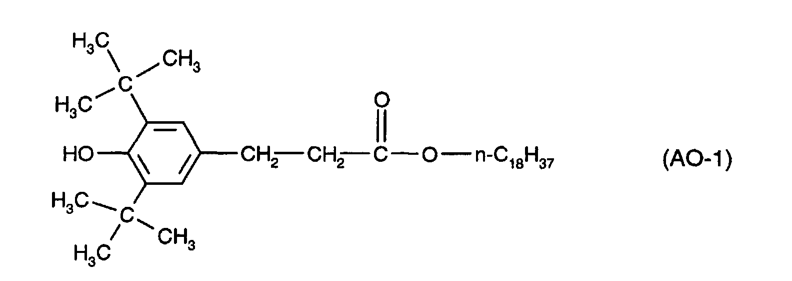

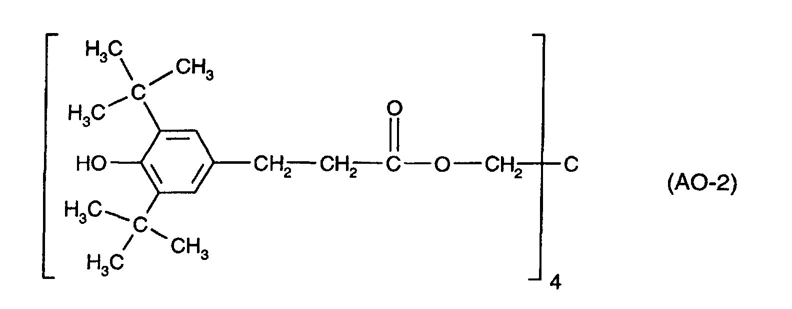

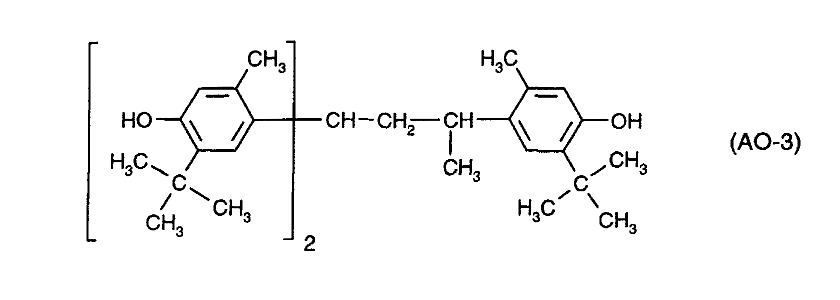

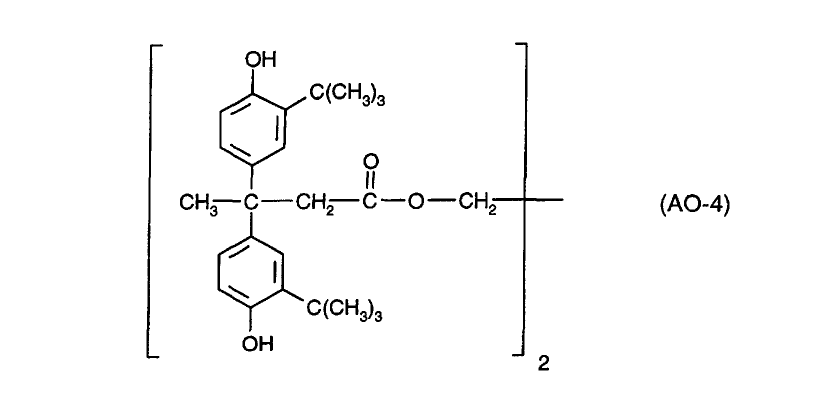

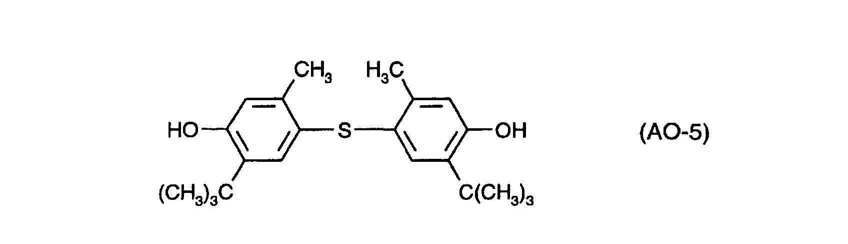

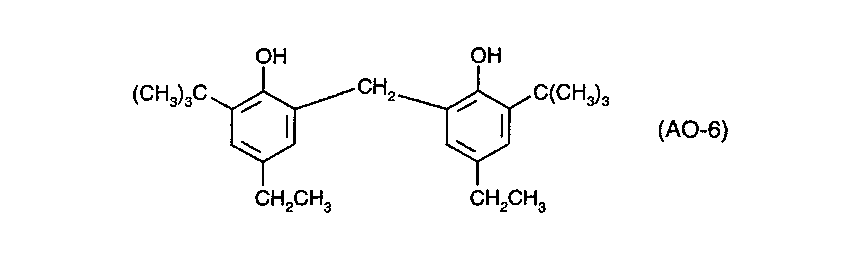

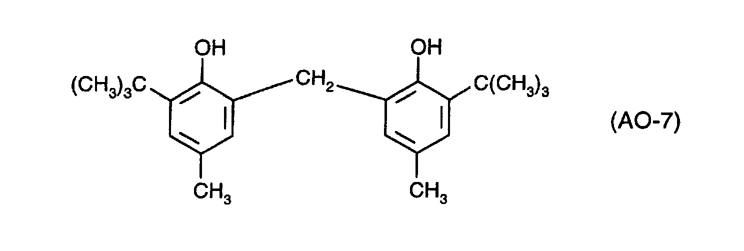

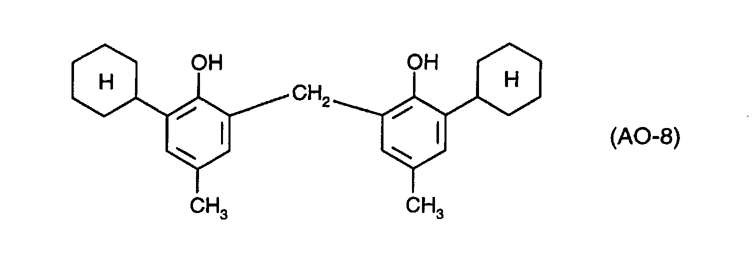

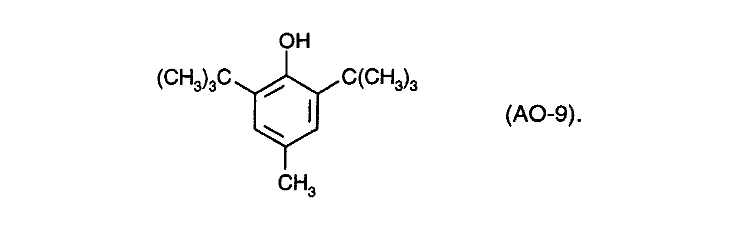

9. A composition according to claim 1, wherein component (a) is a natural, semi-synthetic or synthetic polymer.

10. A composition according to claim 1, wherein component (a) is a thermoplastic polymer.

11. A composition according to claim 1, wherein component (a) is a copolymer of styrene or α-methylstyrene with a diene.

12. A composition according to claim 1, wherein component (a) is a styrene/butadiene copolymer, a styrene/butadiene block copolymer or polybutadiene.

13. A composition according to claim 1 comprising further additives in addition to components (a), (b) and (c).

14. A stabiliser mixture comprising
i) at least one compound of formula I 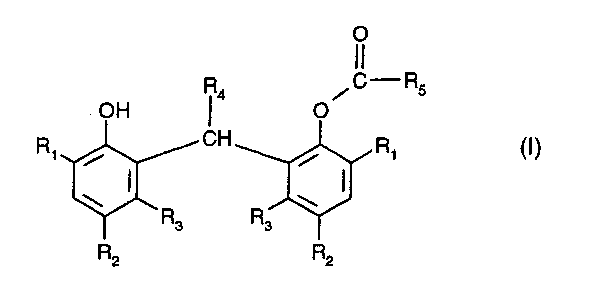 wherein
R₁ and R₂ are each independently of the other C₁-C₂₅alkyl; C₅-C₁₂cycloalkyl unsubstituted or substituted by C₁-C₄alkyl; C₇-C₉phenylalkyl; or phenyl unsubstituted or substituted by C₁-C₄alkyl,
R₃ is hydrogen or methyl,
R₄ is hydrogen or C₁-C₈alkyl,
R₅ is C₁-C₂₅alkyl; C₂-C₂₅alkyl interrupted by oxygen, sulfur or 〉N―R₆ ; C₂-C₂₄- alkenyl; C₈-C₃₀phenylalkenyl unsubstituted or substituted on the phenyl ring by halogen, C₁-C₄alkyl, C₁-C₄alkoxy or C₁-C₄alkylthio; C₅-C₁₂cycloalkyl unsubstituted or substituted by C₁-C₄alkyl; C₈-C₃₀phenylalkyl unsubstituted or substituted on the phenyl ring by halogen, C₁-C₄alkyl, C₁-C₄alkoxy or C₁-C₄alkylthio; or phenyl unsubstituted or substituted by halogen, C₁-C₄alkyl, C₁-C₄alkoxy or C₁-C₄alkylthio, and
R₆ is hydrogen or C₁-C₁₈alkyl, and
ii) calcium lactate and/or calcium stearoyl-2-lactylate.

15. A stabiliser mixture according to claim 14 comprising in addition iii) at least one compound from the group of the phenolic antioxidants.

16. A stabiliser mixture according to claim 14, wherein the ratio by weight of component (i) to component (ii) is from 1 : 10 to 10 : 1.

17. A stabiliser mixture according to claim 15, wherein the ratio by weight of components (i) to (ii) to (iii) is from 1 : 1 : 1 to 1 : 10 : 10.

18. A method of stabilising an organic material against oxidative, thermal or light-induced degradation which comprises incorporating into or applying to that material at least one each of components (b) and (c) according to claim 1.

19. The use of a mixture of components (b) and (c) according to claim 1 as stabilisers for organic materials against oxidative, thermal or light-induced degradation.

## Revendications

1. Composition contenant
a) une matière organique soumise à la dégradation oxydative, thermique et/ou induite par la lumière
b) au moins un composé de formule I 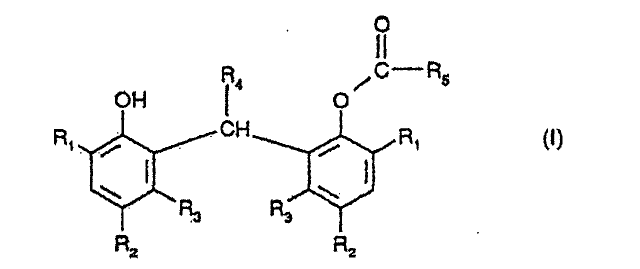 où
R₁ et R₂ représentent, indépendamment l'un de l'autre, des groupes alkyle en C₁-C₂₅, cycloalkyle en C₅-C₁₂ non substitué ou substitué par un substituant alkyle en C₁-C₄ ; phénylalkyle en C₇-C₉, phényle non substitué ou substitué par un substituant alkyle en C₁-C₄ ;
R₃ représente un atome d'hydrogène ou un groupe méthyle,
R₄ représente un atome d'hydrogène ou un groupe alkyle en C₁-C₈,
R₅ représente des groupes alkyle en C₁-C₂₅, alkyle en C₂-C₂₅ interrompu par un groupe oxygène, soufre ou 〉N―R₆ ; alcényle en C₂-C₂₄, phénylalcényle en C₈-C₃₀ non substitué ou substitué sur le cycle phényle par des substituants halogène, alkyle en C₁-C₄, alkoxy en C₁-C₄ ou (alkyl en C₁-C₄)thio ; cycloalkyle en C₅-C₁₂ non substitué ou substitué par un substituant alkyle en C₁-C₄ ; phénylalkyle en C₈-C₃₀ non substitué ou substitué sur le cycle phényle par des substituants halogène, alkyle en C₁-C₄, alkoxy en C₁-C₄ ou (alkyl en C₁-C₄)thio ; phényle non substitué ou substitué par des substituants halogène, alkyle en C₁-C₄, alkoxy en C₁-C₄ ou (alkyl en C₁-C₄) thio,
R₆ représente un atome d'hydrogène ou un groupe alkyle en C₁-C₁₈, et
c) le lactate de calcium et/ou le stéaroyl-2-lactylate de calcium.

2. Composition selon le revendication 1, contenant de plus d) au moins un composé pris dans le groupe des antioxydants phénoliques.

3. Composition selon la revendication 1, contenant en tant que composant (b) au moins un composé de formule I, où
R₁ et R₂ représentent, indépendamment l'un de l'autre, des groupes alkyle en C₁-C₁₈, cycloalkyle en C₅-C₁₂ non substitué ou substitué par un substituant alkyle en C₁-C₄ ; phénylalkyle en C₇-C₉ ou phényle ;
R₃ représente un atome d'hydrogène ou un groupe méthyle,
R₄ représente un atome d'hydrogène ou un groupe alkyle en C₁-C₈,
R₅ représente un groupe alkyle en C₁-C₁₈, un groupe alkyle en C₂-C₁₈ interrompu par un groupe oxygène, soufre ou 〉N―R₆ ; alcényle en C₂-C₁₈, phénylalcényle en C₈-C₁₈ non substitué ou substitué sur le cycle phényle par des substituants halogène, alkyle en C₁-C₄, alkoxy en C₁-C₄ ou (alkyl en C₁-C₄)thio ; cycloalkyle en C₅-C₁₂, phénylalkyle en C₈-C₁₈ non substitué ou substitué sur le cycle phényle par des substituants halogène, alkyle en C₁-C₄, alkoxy en C₁-C₄ ou (alkyl en C₁-C₄)thio ; phényle non substitué ou substitué par des substituants chlore, alkyle en C₁-C₄ ou alkoxy en C₁-C₄, et
R₆ représente un atome d'hydrogène ou un groupe alkyle en C₁-C₁₂.

4. Composition selon la revendication 1, contenant en tant que composant (b) au moins un composé de formule I, où
R₁ et R₂ représentent, indépendamment l'un de l'autre, un groupe alkyle en C₁-C₁₂, un groupe cycloalkyle en C₅-C₈, phénylalkyle en C₇-C₉ ou phényle,
R₃ représente un atome d'hydrogène,
R₄ représente un atome d'hydrogène ou un groupe alkyle en C₁-C₄,
R₅ représente un groupe alkyle en C₁-C₁₂, un groupe alkyle en C₂-C₁₂ interrompu par un groupe oxygène ou soufre ; alcényle en C₂-C₁₂, phénylalcényle en C₈-C₁₀ non substitué ou substitué sur le cycle phényle par des substituants alkyle en C₁-C₄ ou alkoxy en C₁-C₄ ; cycloalkyle en C₅-C₈, phénylalkyle en C₈-C₁₈ non substitué ou substitué sur le cycle phényle par des substituants chlore, alkyle en C₁-C₄ ou alkoxy en C₁-C₄ ; phényle non substitué ou substitué par des substituants chlore, alkyle en C₁-C₄ ou alkoxy en C₁-C₄.

5. Composition selon la revendication 1, contenant en tant que composant (b) au moins un composé de formule I, où
R₁ représente un groupe alkyle en C₁-C₆, cyclohexyle ou phényle,
R₂ représente un groupe alkyle en C₁-C₆, cyclohexyle ou phényle,
R₃ représente un atome d'hydrogène,
R₄ représente un atome d'hydrogène ou un groupe méthyle,
R₅ représente des groupe alkyles en C₁-C₁₂, alkyle en C₂-C₁₂ interrompu par un groupe oxygène ; alcényle en C₂-C₁₀, phénylalcényle en C₈-C₁₀ non substitué ou substitué sur le cycle phényle par un substituant méthoxy ; cyclohexyle, phényle non substitué ou substitué par des substituants chlore ou méthoxy.

6. Composition selon la revendication 1, contenant en tant que composant (b) au moins un composé de formule I, où
R₁ représente un tert.-butyle ou tert.-pentyle,
R₂ représente un groupe alkyle en C₁-C₅,
R₃ représente un atome d'hydrogène,
R₄ représente un atome d'hydrogène ou un groupe méthyle,
R₅ représente un groupe vinyle.

7. Composition selon la revendication 1, où le composant (c) représente le stéaroyl-2-lactylate de calcium.

8. Composition selon la revendication 2, où le composant (d) est un composé de formule
AO-1, AO-2, AO-3, AO-4, AO-5, AO-6, AO-7, AO-8 ou AO-9

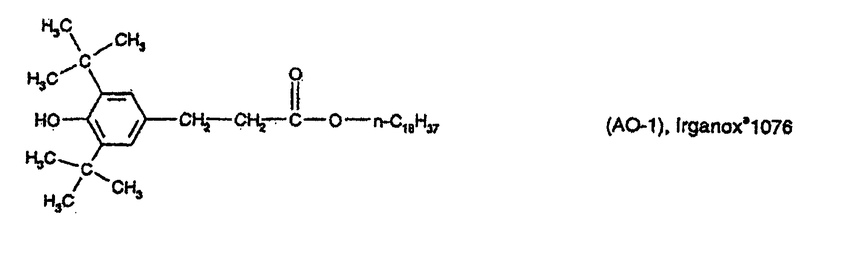

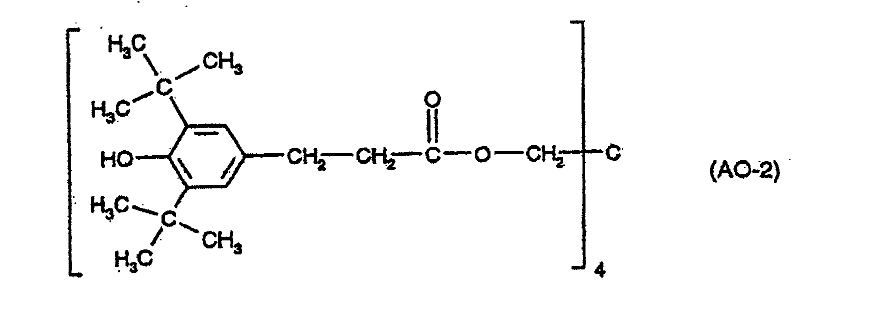

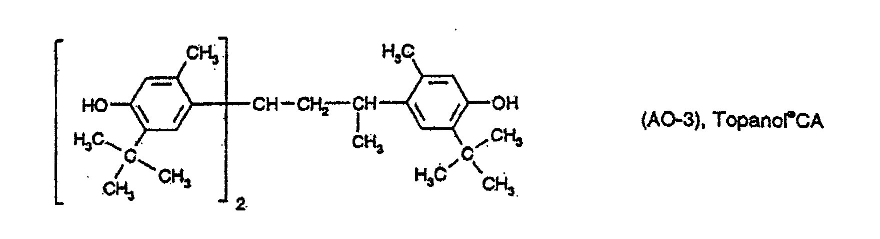

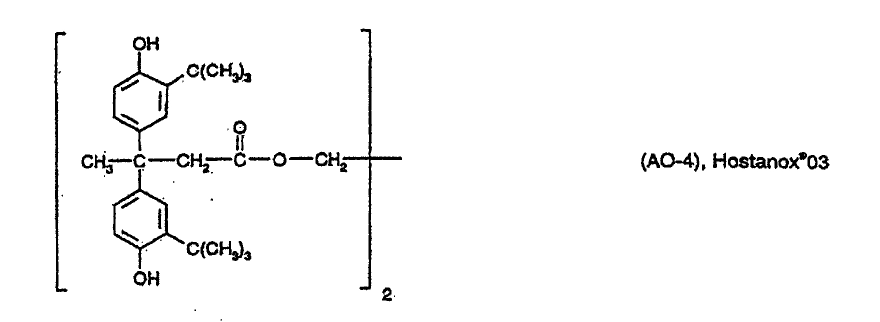

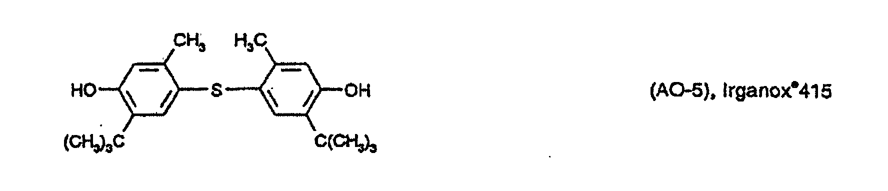

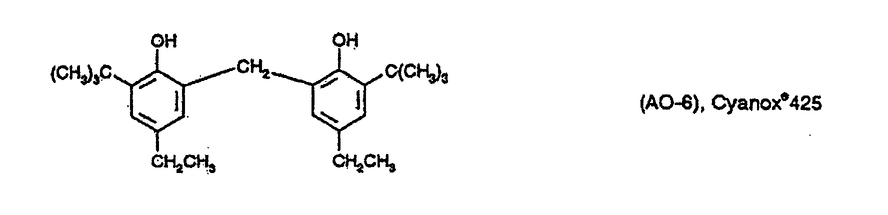

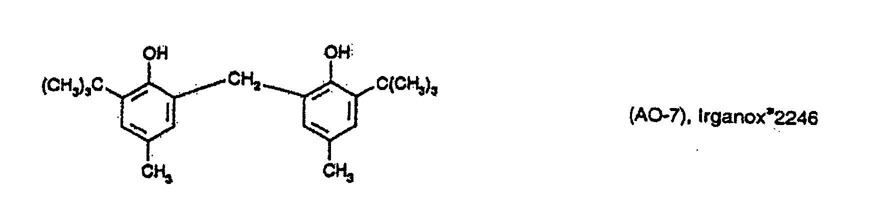

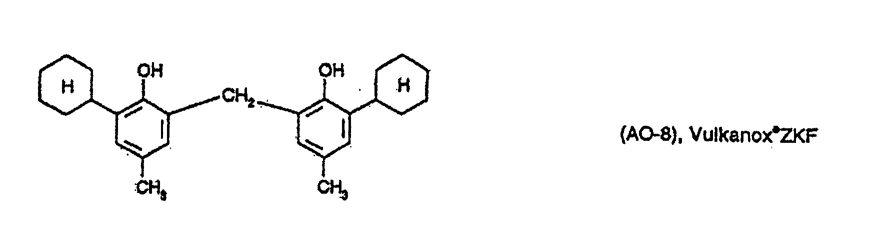

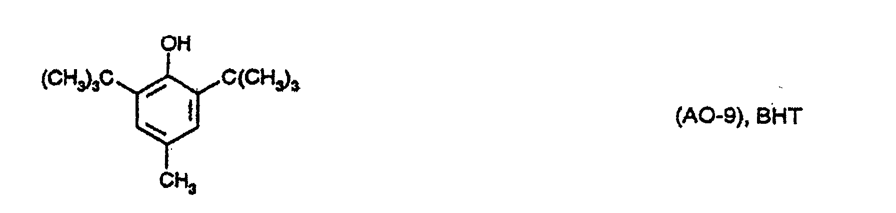

9. Composition selon la revendication 1, où le composant (a) est un polymère naturel, semi-synthétique ou synthétique.

10. Composition selon la revendication 1, où le composant (a) est un polymère thermoplastique.

11. Composition selon la revendication 1, où le composant (a) est un copolymère de styrène ou d'α-méthylstyrène avec des diènes.

12. Composition selon la revendication 1, où le composant (a) est un copolymère de styrène-butadiène, un copolymère séquencé de styrène-butadiène ou le polybutadiène.

13. Composition selon la revendication 1 contenant au côté des composants (a), (b) et (c), en plus d'autres additifs.

14. Mélange de stabilisants contenant
i) au moins un composé de formule I 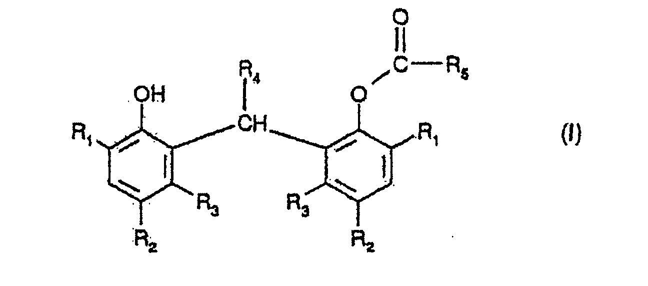 où
R₁ et R₂ représentent, indépendamment l'un de l'autre, des groupes alkyle en C₁-C₂₅, cycloalkyle en C₅-C₁₂ non substitué ou substitué par un substituant alkyle en C₁-C₄ ; phénylalkyle en C₇-C₉, phényle non substitué ou substitué par un substituant alkyle en C₁-C₄ ;
R₃ représente un atome d'hydrogène ou un groupe méthyle,
R₄ représente un atome d'hydrogène ou un groupe alkyle en C₁-C₈,
R₅ représente des groupes alkyle en C₁-C₂₅, alkyle en C₂-C₂₅ interrompu par un groupe oxygène, soufre ou 〉N―R₆ ; alcényle en C₂-C₂₄, phénylalcényle en C₈-C₃₀ non substitué ou substitué sur le cycle phényle par des substituants halogène, alkyle en C₁-C₄, alkoxy en C₁-C₄ ou (alkyl en C₁-C₄) thio ; cycloalkyle en C₅-C₁₂ non substitué ou substitué par un substituant alkyle en C₁-C₄ ; phénylalkyle en C₈-C₃₀ non substitué ou substitué sur le cycle phényle par des substituants halogène, alkyle en C₁-C₄, alkoxy en C₁-C₄ ou (alkyl en C₁-C₄)thio ; phényle non substitué ou substitué par des substituants halogène, alkyle en C₁-C₄, alkoxy en C₁-C₄ ou (alkyl en C₁-C₄)thio,
R₆ représente un atome d'hydrogène ou un groupe alkyle en C₁-C₁₈, et
ii) le lactate de calcium et/ou le stéaroyl-2-lactylate de calcium.

15. Mélange de stabilisants selon la revendication 14, contenant en plus iii) au moins un composé pris dans le groupe des antioxydants phénoliques.

16. Mélange de stabilisants selon la revendication 14, où le rapport en poids des composants (i):(ii) est de 1:10 à 10:1.

17. Mélange de stabilisants selon la revendication 15, où les rapports en poids des composants (i):(ii):(iii) est de 1:1:1 à 1:10:10.

18. Procédé pour la stabilisation d'une matière organique contre la dégradation oxydative, thermique ou induite par la lumière, **caractérisé en ce qu'**on incorpore ou on applique par dépôt à celle-ci chaque fois au moins un composant (b) et (c).

19. Utilisation d'un mélange des composants (b) et (c) selon la revendication 1 en tant que stabilisant pour matières organiques contre la dégradation oxydative, thermique ou induite par la lumière.
